(19) Europäisches Patentamt
European Patent Office
Office européen des brevets

(11) **EP 4 530 938 A1**

(12) **EUROPEAN PATENT APPLICATION**

(43) Date of publication:
**02.04.2025 Bulletin 2025/14**

(21) Application number: **23201091.8**

(22) Date of filing: **29.09.2023**

(51) International Patent Classification (IPC):
**G06N 10/60** (2022.01)  **G06N 3/084** (2023.01)
**G06N 10/20** (2022.01)  **G06N 10/40** (2022.01)

(52) Cooperative Patent Classification (CPC):
**G06N 10/60; G06N 3/084; G06N 10/20;**
**G06N 10/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Pasqal Netherlands B.V.**
**1076 ED Amsterdam (NL)**

(72) Inventors:
• **Ghosh, Atiyo**
  **1076 ED Amsterdam (NL)**
• **Elfving, Vincent Emanuel**
  **1076 ED Amsterdam (NL)**
• **Velikova, Gergana Venkova**
  **1076 ED Amsterdam (NL)**

(74) Representative: **De Vries & Metman**
**Overschiestraat 180**
**1062 XK Amsterdam (NL)**

(54) **SHOT-EFFICIENT QUANTUM SOLVER FOR DIFFERENTIAL EQUATIONS**

(57)     Systems and methods are disclosed for solving a differential problem using a hybrid computer system comprising a classical computer system and a quantum processor. The method comprises receiving or determining one or more variational quantum circuits defining a parameterized quantum model of a trial function, and an integral formulation of the differential equation. The integral formulation defines an equation with a differential order that is smaller than the differential order of the differential equation, and incorporates at least part of the boundary condition. The integral formulation comprises a path integral with a first integration limit corresponding to a point on the boundary. The method further comprises determining a solution to the differential problem based on the parameterized quantum model and a loss function associated with the integral formulation of the differential problem. Evaluation of the loss function for a point under consideration comprises computation of the integral based on one or more collocation points between the point on the boundary and the point under consideration. The determination of the solution includes varying the variational parameters to determine a set of optimal parameters defining a solution of the differential equation.

Fig. 4A

402 — Input: differential problem
404 — Formulate integral equation based on differential problem
406 — Represent trial function as variational quantum circuit
408 — Derive loss function from parameterized integral equation
410 — Approximate integral in loss function, e.g., regular quasi or quantum Monte Carlo, midpoint rules, quadrature
412 — Gradient-based optimization of circuit parameters.
414 — Gradient-free optimization of circuit parameters, e.g., SPSA, Genetic Algorithms, Evolutionary Strategies
416 — Evaluate solution with quantum model at optimized parameters at chosen coordinates

**Description**

Technical field

The disclosure relates to quantum encoders, and in particular, though not exclusively, to methods and systems for solving a (non)linear set of differential equations using a hybrid quantum computer, and to a computer program product enabling a hybrid quantum computer to perform such methods.

Background

Quantum computing is a burgeoning field with promises of implementing algorithms for certain problems with a speed-up over their classical counterpart - known as quantum advantage. These speed-ups come from properties unique to quantum computers - such as superposition, entanglement, and an exponentially scaling computational space - which lead to a fundamentally different way of computation. Fields which are promising for quantum advantage to be found include fields in which quantum-mechanical phenomena play a roll, such as certain chemistry applications and molecular simulations. Other examples are provided by fields with (computationally) large problems, such as generative modelling and many differential equations.

Differential equations form the basis of modelling a great number of systems, such as electromagnetic waves, evolution of heat distributions, population dynamics, optimisation of industrial processes, and time-evolution of probability distributions. Consequently, there has been much recent interest on biasing neural networks towards differential equation solutions. A common means of representing differential equations in neural networks is using Physics-Informed Neural Networks (PINNs), which use (potentially higher-order) derivatives of neural networks outputs with respect to their inputs to construct appropriate regularisation terms towards a prescribed differential equation.

Quantum algorithms solving differential equations are often based on so-called Quantum Neural Networks or Quantum Physics-informed Neural Networks (qPINNs), which are based on a variational solver. Variational solvers utilise circuits with tuneable parameters to represent a trial function. A loss function representing the problem is then optimised to receive parameter values for which the trial function approximates the solution to the differential equation. Algorithms in this category are often suitable for near-term implementation.

However, a limiting factor in these quantum algorithms is the so-called shot rate, i.e., the rate at which measurements can be made. For example, may algorithms provide the solution as an expectation value, meaning that a sufficient number of measurements must be made to be able to determine the expectation value with a desired accuracy. Nevertheless, most demonstrations of this technique assume idealised simulated quantum circuits where the respective expectations are directly available. In real quantum hardware, such ideal expectations are not accessible and must be obtained by averaging over many shots. This introduces additional computations, the cost of which has not been considered in the majority of the published studies. The requirements of higher-order derivatives for physics-informed regularisers are especially high in terms of circuit repetitions (shots) compared to lower-order derivatives required for supervised learning.

Therefore, there is a need in the art for algorithms for solving differential equations that reduce the number of quantum measurements ('shots'), without a reduction in accuracy.

Summary

It is an aim of embodiments in this disclosure to provide a system and method for solving differential equations that avoids, or at least reduces the drawbacks of the prior art.

In a first aspect, embodiments in this disclosure relate to a method for solving a differential problem using a hybrid computer system comprising a classical computer system and a quantum processor. The differential problem defines a differential equation and a boundary condition. The method comprises receiving or determining information on one or more quantum circuits defining operations of a parameterized quantum model of a trial function parametrized by variational parameters, and an integral formulation of the differential equation. The integral formulation defines an equation with a differential order that is smaller with respect to at least one independent variable of the differential equation than a differential order of the differential equation with respect to the at least one independent variable. The integral formulation may incorporate at least part of the boundary condition. The integral formulation may comprise an integral, preferably a path integral, with a first integration limit corresponding to a point on the boundary and a second integration limit corresponding to a point in the domain. The method further comprises determining a solution to the differential problem based on the parameterized quantum model and a loss function based on the integral formulation of the differential problem. Evaluation of the loss function for the point in the domain (a point under consideration) may comprise computation of the integral, the computation of the integral being based on one or more collocation points between the point on the boundary and the point in the domain (the point under consideration) and/or on one or more previously evaluated points in the domain. The determination of the solution includes varying the variational parameters to determine a set of optimal parameters defining a solution of the differential equation. The variation of the variational parameters includes: translating the operations of the one or more quantum circuits into control signals for control and readout of quantum elements (e.g., qubits) of the quantum processor; applying the operations of the one or more quantum circuits to the quantum elements based on the control signals; determining classical measurement data by estimating one or more expectation values based on a plurality of measurements on the quantum elements; computing a loss value based on the loss function and the classical measurement data; and adjusting the variational parameters based on the loss value.

The differential equation is associated with at least one independent variable. The domain defines a space associated with the independent variable over which the differential equation is defined, i.e., the domain is the set of potential input values for the differential equation.

The integral in the integral formulation of the differential problem has a different second limit for each point for which the loss function is being evaluated, the second limit corresponding to the point in the domain under consideration. Such integral may be referred to as a Volterra integral.

The collocation point comprises a (predetermined or randomly selected) set of values of the independent variable (typically in the domain or at least close to the domain) used for the optimization.

Current (variational) quantum algorithms typically evaluate one or more derivatives of a parametrized trial function $f_\theta(x)$ at a set of collocation points $\{x_i\}$. The function value (or derivative thereof) at a given point is typically expressed as an expectation value, whose accuracy increases with the number of measurements.

Derivatives may be computed in any of two ways: analytically by differentiation of the feature map (using, e.g., the, possibly generalized, parameter shift rule), or using a finite-differencing based method.

The computation of an analytic derivative requires determination of at least two expectation values (more for higher-order derivatives, and also more for non-idempotent feature maps), per quantum element (e.g., qubits or qudits). Additionally, for a given desired accuracy, a larger number of shots is required for the determination of the derivative compared to the determination of the base function, as the derivative is determined as the difference of two expectation values. As the methods according to the embodiments described herein require fewer (possibly none) determinations of derivatives compared to these prior-art methods, it improves on the required number of shots with at least a factor of two times the number of quantum elements; typically with a factor of $(2N)^d$ where $N$ represents the number of data encodings and $d$ represents the order of the derivative. Consequently, the methods according to the embodiments described in this application may substantially reduce the number of shots, e.g., with a factor of tens to hundreds for each 'eliminated' derivative. In particular for ordinary differential equations, and certain classes of partial differential equations, where substantially all derivatives may be eliminated, this can lead to a corresponding speed-up of the computation with a factor of tens to hundreds and a corresponding reduction in resources and energy.

Compared to methods using analytical derivatives, finite-difference based methods use fewer shots to determine a local derivative, assuming the same number of collocation points. However, depending on the behaviour of the function, substantial errors may be introduced. These may lead to poor convergence, or to a need for a higher number of collocation points, which in turn necessitates more shots. Additionally, the inherent noise (and hence uncertainty in function values) is multiplied by the multiplicative inverse of a small number (the size of the finite difference), which can lead to very large errors. Therefore, if the derivative should be known with a required accuracy, the accuracy of the function whose derivative is taken should be much higher, generally requiring a much higher shot count for this function.

In the methods according to the embodiments, computation of at least one derivative is effectively replaced by computation of an integral, running from a boundary to the (collocation) point being evaluated. The integral may be computed as a (weighted) sum of function values. As noted above, the need to compute fewer derivatives already reduces the shot requirement. Additionally, because the computed integral at a point effectively combines the results of all preceding points, the uncertainty caused by the measurement noise is reduced accordingly. This may reduce the shot requirement (given a required accuracy) especially for function values that are at some distance from an initial value. This can be particularly advantageous if at least two boundary values are known for the variable being integrated over.

Especially this latter advantage is not limited to quantum implementations, but also applies to classical implementations. This can lead to faster convergence and/or more accurate solutions also for classical neural networks, spiking neural networks, stochastic neural networks, et cetera.

Thus, the embodiments in this disclosure demonstrate how to construct a global formulation of physics-informed losses especially amenable to solve (ordinary) differential equations on near-term quantum computers in a shot-efficient manner. The resulting approach reduces the order of derivatives required to calculate a loss compared to classical Physics-informed Neural Networks (PINNs) and quantum Physics-informed Neural Networks (qPINNs). In the case of initial value problems in ordinary differential equations (ODEs) and some partial differential equations (PDEs), the current methods remove completely the need for (higher-order) automatic differentiation, thus providing (at least) an $\mathcal{O}(N)$ improvement in shot-efficiency, where $N$ is the number of data-encodings of the quantum neural network. The formulation of the loss function naturally incorporates boundary conditions and physics-informed losses into a single optimisation term.

It should be noted that the relative performance of quantum neural network algorithms in the infinite-shot limit (as is often used in simulations) does not necessarily correspond to relative performance in the finite-shot limit (i.e., in case of real hardware implementations).

In an embodiment, varying the variational parameters includes one or more of: determining or estimating a gradient of the loss value with respect to the variational parameters and adjusting the variational parameters based on the determined or estimated gradient, or determining a population of initial sets of variational parameters with associated loss values and determining adjusted sets of variational parameters based on the initial sets of variational parameters and the associated loss values.

Estimating a gradient may be done on very few (e.g., one, two, three, or four) estimates. Such methods are sometimes referred to as 'gradient-free' methods, because they omit most of the computational load of actually determining the gradient. Such methods require relatively few shots, and are therefore especially suitable for implementation on near-term quantum computers.

In an embodiment, computing the loss value comprises estimating the integral using at least one of: a regular Monte Carlo-based method, a quasi-Monte Carlo-based method, a quantum Monte Carlo-based method, a method based on midpoint rules, or a quadrature-based method. These are all suitable methods to compute the integrals as described herein. However, other numerical integration methods may also be used. It has been shown that quasi-Monte Carlo-based methods tend to be particularly efficient for numerically evaluating the integral.

In an embodiment, the parametrized quantum model is a quantum neural network, the quantum neural network preferably comprising a feature map for encoding an independent variable and a variational circuit, wherein preferably a function value of the trial function is associated with an observable (e.g., an expectation value) of the one or more quantum circuits, or wherein the function value is associated with a functional of an output state of the one or more quantum circuits, e.g. an overlap with the zero state, a real component, or an imaginary component.

In an embodiment, the parametrized quantum model is a quantum-kernel based model, preferable evaluation of the quantum kernel comprising determining an overlap between a first quantum state associated with a first input variable and a second quantum state associated with a second input variable, preferably the overlap being determined based a Hadamard test or a SWAP test.

In an embodiment, the parametrized quantum model is an amplitude-encoding based model, preferably the one or more quantum circuits defining operations for encoding primitive elements (e.g., terms such as $f(x)$, $f(x)/dx$, $g(x)$, etc.) of the differential equation in a plurality of quantum states of quantum elements of the quantum processor, each quantum state of the plurality of quantum states corresponding to a set of coefficients associated with the basis functions.

The feature map can be, e.g., a Fourier feature map or a Chebyshev feature map. In some embodiments, the feature map may comprise one or more trainable parameters.

In an embodiment, the differential equation is an ordinary differential equation, partial differential equation, a stochastic differential equation, a delay differential equation, and/or wherein the differential problem is an initial value problem.

In an embodiment, the differential problem defines a further differential equation. In such an embodiment, the method may further comprise solving the further differential equation using a further method for solving differential problems. The further method may be based on differential quantum circuits, based on quantum kernels, or based on amplitude-encoding of a set of coefficients associated with basis functions representing a trial function.

Such a combination with other methods can be especially relevant for multidimensional PDEs, or for highly non-linear ODEs, where it is not possible to integrate away all derivatives on the domain.

In an embodiment, executing the one or more quantum circuits by the quantum processor comprises translating each of the one or more quantum circuits into a sequence of signals (e.g., pulses, typically electric or electromagnetic pulses such as voltage pulses, optical pulses, or microwave pulses) and using the sequence of signals to operate the quantum elements in the quantum register of the quantum processor.

In an embodiment, receiving hardware measurement data comprises applying a read-out signal to quantum elements of the quantum processor and, in response to the read-out signal, measuring quantum hardware measurement data.

In general, the embodiments described herein can be implemented as sequences of operations that can be executed on, e.g., a neutral atom quantum computer, either in digital mode of operation, in analog mode, or in digital-analog mode. In particular, a hybrid quantum computer as described herein may include one or more of: a gate-based qubit device, a digital/analog quantum device, a neutral-atom-based quantum device, an optical qubit device and/or a gaussian boson sampling device.

A method for solving a differential problem, the differential problem defining a differential equation and a boundary condition, the method comprising:

receiving or determining information on a parametrized model of a trial function parametrized by variational parameters and on an integral formulation of the differential equation, the integral formulation defining an equation with a differential order that is smaller with respect to at least one independent variable of the differential equation than a differential order of the differential equation with respect to the at least one independent variable, the integral formulation being based on the boundary condition; and

determining the solution to the differential problem based on the parameterized model and a loss function associated with the integral formulation of the differential problem, the determining including training a neural network to determine a set of optimal network parameters such that the trained neural network represent a solution of the differential equation.

In an embodiment, training the neural network comprises variationally optimising the variational parameters. Variationally optimising the variational parameters may include: evaluating the parametrized model of the trial function using first values for the variational parameters; computing a loss value based on the loss function and the evaluated parametrized model; and adjusting the variational parameters based on the loss value.

In an aspect, the disclosure relates to a system for solving a differential problem, the differential problem defining a differential equation on a domain and a boundary condition on a boundary of the domain, the system comprising a classical computer system and a special purpose processor, the system being configured for: receiving or determining information on a parametrized model of a trial function parametrized by variational parameters; receiving or determining an integral formulation of the differential equation, the integral formulation defining an equation with a differential order that is smaller with respect to at least one independent variable of the differential equation than a differential order of the differential equation with respect to the at least one independent variable, the integral formulation incorporating at least part of the boundary condition, the integral formulation comprising a path integral with a first integration limit corresponding to a point on the boundary and a second integration limit corresponding to a point in the domain; and determining the solution to the differential problem based on the parameterized model and a loss function associated with the integral formulation of the differential problem, wherein evaluation of the loss function for the point in the domain comprises computation of the integral, the computation of the integral being based on one or more collocation points between the point on the boundary and the point in the domain, and wherein the determination of the solution includes training a neural network to determine a set of optimal variational parameters such that the trained neural network represents a solution of the differential equation.

In an embodiment, the system is a hybrid quantum computer system comprising a classical computer system and a quantum processor.

In such an embodiment, the special purpose processor is a quantum processor, and wherein varying of the variational parameters includes: translating the operations of the one or more quantum circuits into control signals for control and readout of quantum elements of the quantum processor; applying the operations of one or more the quantum circuit to the quantum elements based on the control signals; determining classical measurement data by estimating an expectation value based on a plurality of measurements on the quantum elements; computing a loss value based on the loss function and the classical measurement data; and adjusting the variational parameters based on the loss value.

In general, the computer system may be configured to execute any of the method steps described above.

One aspect of this disclosure relates to a classical computer system or hybrid quantum computer system comprising a computer readable storage medium having computer readable program code embodied therewith, and a processor, preferably a microprocessor, coupled to the computer readable storage medium, wherein responsive to executing the computer readable program code, the processor is configured to perform any of the methods described herein.

One aspect of this disclosure relates to a computer program or suite of computer programs comprising at least one software code portion or a computer program product storing at least one software code portion, the software code portion, when run on a classical computer system or hybrid quantum computer system, being configured for executing any of the methods described herein.

One aspect of this disclosure relates to a non-transitory computer-readable storage medium storing at least one software code portion, the software code portion, when executed or processed by a computer, configures the computer or hybrid computing system to perform any of the methods described herein.

As will be appreciated by one skilled in the art, aspects of the present invention may be embodied as a system, method or computer program product. Accordingly, aspects of the present embodiments may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present embodiments may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fibre, cable, RF, etc., or any suitable combination of the foregoing. Computer program code for carrying out operations for aspects of the present embodiments may be written in any combination of one or more programming languages, including a functional or an object oriented programming language such as Java, Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present embodiments are described below with reference to flowchart illustrations and/or block diagrams of methods, apparatus (systems), and computer program products according to embodiments of the embodiments. It will be understood that each block of the flowchart illustrations and/or block diagrams, and combinations of blocks in the flowchart illustrations and/or block diagrams, can be implemented by computer program instructions.

These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present embodiments. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The embodiments will be further illustrated with reference to the attached drawings, which schematically will show embodiments according to the invention. It will be understood that the invention is not in any way restricted to these specific embodiments. Identical reference signs refer to identical, or at least similar elements.

Brief description of the drawings

**Fig. 1A** schematically depicts a known method to solve a differential equation, **Fig. 1B** shows an example of a basic form of a quantum feature map, and **Fig. 1C** shows an example of a derivative thereof;

**Fig. 2** is a flowchart of method according to an embodiment in comparison with a prior art method;

**Fig. 3A** illustrates a method of solving a differential problem using a variational quantum circuit using a known method, and **Fig. 3B** and **3C** illustrate a method of solving the differential equation using the variational quantum circuit according to an embodiment;

**Fig. 4** is a flowchart of method according to an embodiment;

**Fig. 5** is a quantum circuit diagram of the quantum circuit that is used for the shots experiments shown in **Figs. 6** and **7;**

**Fig. 6A-F** are graphs showing experimental results comparing a method according to an embodiment to a prior art method;

**Fig. 7A-C** are graphs showing experimental results according to an embodiment to a prior art method;

**Fig. 8A-C** are graphs showing further experimental results comparing a method according to an embodiment to a prior art method;

**Fig. 9A-C** are graphs showing further experimental results comparing a method according to an embodiment to a prior art method;

**Fig. 10A-C** are graphs showing experimental results comparing a method according to an embodiment to a prior art method;

**Fig. 11A-C** schematically show differentiated feature maps according to embodiments;

**Fig. 12A-E** schematically depict hardware-level schematics illustrating the application of logical operations to qubits using a quantum circuit;

**Fig. 13A** and **13B** depict systems describing a Digital-Analog implementation of a quantum algorithm and a quantum feature map, respectively; **Fig. 13C** illustrates pulses corresponding to the quantum feature map;

**Fig. 14A** and **14B** present quantum circuits based on a Digital-Analog implementation of quantum circuits;

**Fig. 15A** and **15B** present quantum circuits based on a Digital-Analog implementation of quantum circuits;

**Fig. 16** presents a workflow for generalized circuit differentiation for use in an embodiment; and

**Fig. 17A** and **17B** are block diagrams illustrating, respectively, an exemplary hybrid data processing system and an exemplary classical data processing system that may be used for executing methods and software products described in this disclosure.

Detailed description

In addition to their application to neural networks in conventional silicon-based hardware, physics-informed loss functions represent a promising means to solve differential equations using quantum neural networks (QNNs) on near-term quantum computers, in particular so-called noisy intermediate-scale quantum (NISQ) computers. However, theoretical research on solving differential equations on quantum computers tends to assume that the expectation of a quantum circuit can be calculated directly, something known as the infinite-shot limit. This is only possible when simulating quantum circuits. When using actual quantum computers, expectation values must be determined via repeated sampling (taking 'shots'). This cost is mostly ignored in current research on the use of quantum neural networks for differential equation solving. As will be discussed in more detail below with reference to **Fig. 10A-C,** the (relative) performance of an algorithm in the infinite-shot limit is not always representative of the (relative) performance of that algorithm in a finite-shot implementation.

Physics-informed regularisation involves taking the derivatives of neural network outputs with respect to input features. In classical neural networks, access to higher order derivatives can be optimised by mixing various modes of automatic differentiation, e.g. by considering forward-mode over reverse-mode automatic differentiation, or via Taylor-mode automatic differentiation. In contrast, for quantum neural networks, derivatives with respect to circuit inputs typically involves a cost $\mathcal{O}(N^d)$, where $N$ is the number of data encodings into a quantum circuit, and d is the order of derivatives. This scaling is similar to repeated use of forward-mode automatic differentiation in classical neural networks: a strategy known to suboptimal.

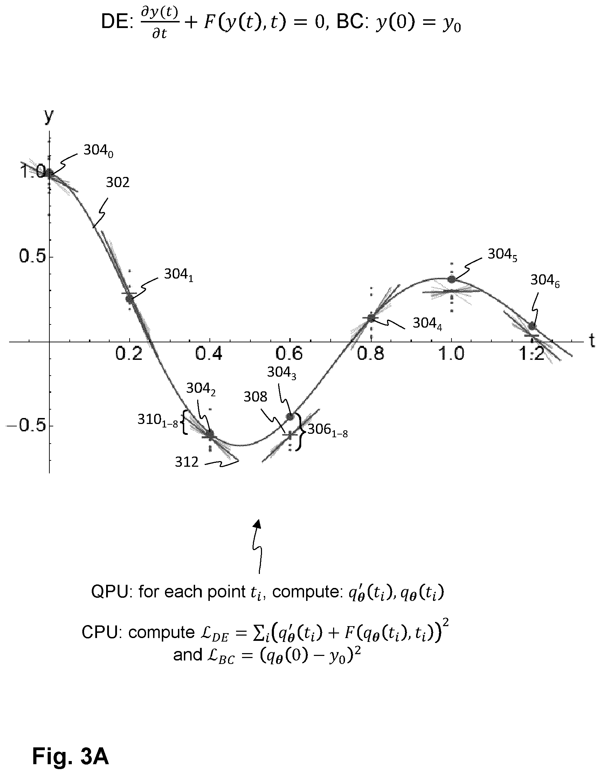

To reduce the number of shots required for variational solving of differential equations, this disclosure presents formulations of physics-informed loss functions amenable to run quantum neural networks on actual (NISQ) quantum hardware. Line integrals of physics-informed losses are constructed from domain boundaries on which appropriate loss functions are defined. This formulation obviates the need for higher-order automatic differentiation when solving initial-value problems for ODEs, and thus is especially interesting as a candidate to solve differential equations on near-term quantum hardware. In addition to reducing the order of automatic differentiation required for ODEs, the current methods also prevent the need to separately balance boundary contributions and interior loss contributions as in regular physics-informed optimisation. The methods also regularise on the global properties of neural networks via line integrals, which introduces an alternative optimisation scheme to the local nature of pointwise gradient optimisation represented by conventional PINN optimisations; this is discussed in more detail below with reference to **Fig. 3A-C.**

While the methods are illustrated using quantum neural networks, they are equally applicable to arbitrary neural networks regardless of the underlying hardware. Examples are applications of line-integral propagated in classical and spiking neural networks.

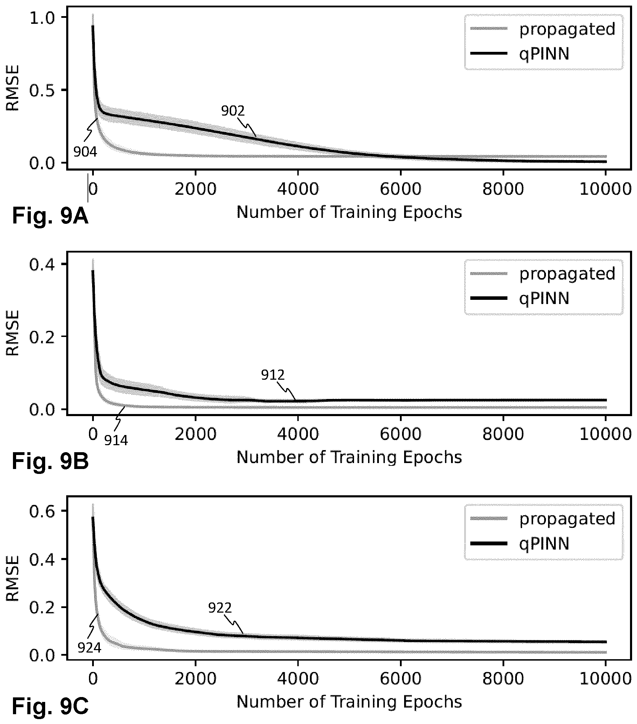

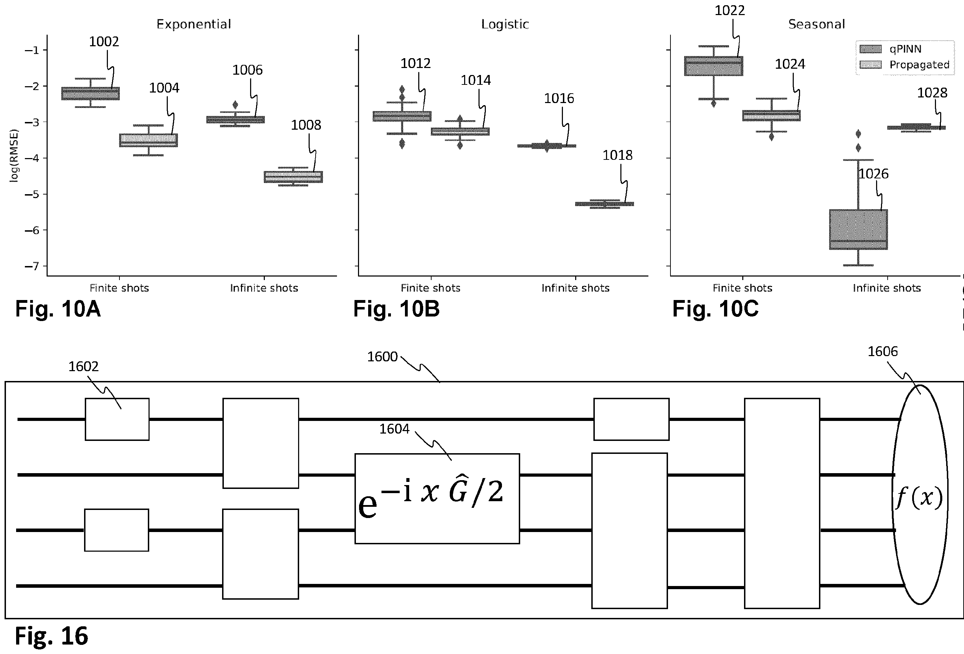

This disclosure demonstrates a means of solving differential equations, in particular ordinary differential equations and certain classed of partial differential equations, with quantum neural networks in a manner amenable to near-term quantum hardware. The proposed methods performs favourably compared to benchmark solutions in terms of both shot requirements and RMSEs. Experimentally, the relative performance of quantum neural networks in the finite and infinite shot limits can be unpredictable, as discussed with reference to **Figs. 9** and **10,** emphasising the need to consider finite-shots in quantum neural network when designing a quantum algorithm.

The performance of the method may depend, up to a point, on the selection of the collocation points. Given that propagated physics-informed loss functions rely on numerical integration, it might be beneficial to draw inspiration from (quasi) Monte-Carlo integration techniques, such as importance sampling, to enhance the presented techniques.

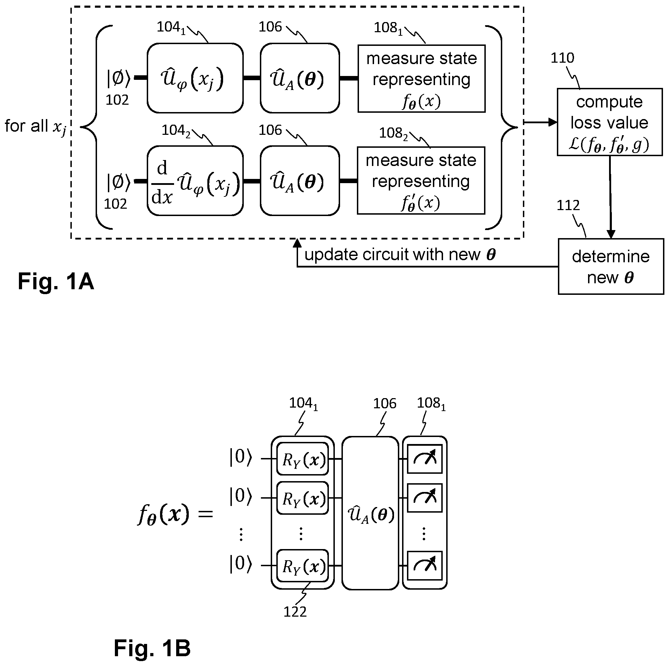

**Fig. 1A** schematically depicts a known method to solve a differential equation. The shown method is based on variational solving the problem using differentiable quantum circuits (DQC). As shown in the figure, the quantum model for the parametrised target function $f_\theta(x)$ may be represented by a quantum circuit including a feature map $\hat{U}_\varphi(x)$ **104₁** for encoding an independent variable $x$ into the Hilbert space of a quantum register **102,** and a variational Ansatz $\hat{U}_A(\boldsymbol{\theta})$ **106**, parameterized by trainable parameters $\theta$. Thus, one can write:

$$f_{\boldsymbol{\theta}}(x) = \left\langle 0 \middle| \hat{U}_\varphi^\dagger(x)\, \hat{U}_A(\boldsymbol{\theta}) \middle| 0 \right\rangle. \tag{1}$$

The derivative of the target function is obtained by differentiating the feature map, and using the same variational Ansatz:

$$f'_{\boldsymbol{\theta}}(x) = \left\langle 0 \middle| \left( \frac{\mathrm{d}}{\mathrm{d}x} \hat{U}_\varphi^\dagger(x) \right) \hat{U}_A(\boldsymbol{\theta}) \middle| 0 \right\rangle. \tag{2}$$

The feature map $\frac{\mathrm{d}}{\mathrm{d}x}\hat{U}_\varphi(x)$ is also referred to as the differentiated feature map.

A solution to the differential equation is found by variationally optimizing the trainable parameters $\theta$. The quantum circuits may include sequences (layers) of quantum gates which may be executed on the quantum register. Here, the only dependence on the input value (independent variable) is in the feature map; the variational Ansatz is independent of the input value $x$; and conversely, the feature map is independent of the trainable parameters $\theta$.

The training of the quantum model may be based on an optimization scheme, wherein after initialisation of the variational parameters, the gate operations of the quantum circuit may be executed, and the state of the quantum register may be measured using a cost function. Based on measured states **108₁,₂**, a loss value may be computed based on a loss function (block **110**). The loss function is based on the differential equation. For example, if the differential equation reads:

$$a\, f'(x) - b\, f(x) - g(x) = 0, \tag{3}$$

(wherein $g(x)$ is a known function of $x$), then the loss function contains a contribution based on measurements **108₁** representing $f(x)$ and a contribution based on measurements **108₂** representing $f'(x)$. The scaling factors $a$ and $b$ and the known function $g(x)$ can be included by the (classical) optimiser without any quantum measurements. As the feature map encodes only a single $x$-value at a time, the loss function comprises a sum over a number of collocation points $x_j$. For the above example differential equation, the loss function may be:

$$\mathcal{L}_{\mathrm{DE}}(\boldsymbol{\theta}) = \sum_j \left\| a\, \hat{C}\left[ \left( \frac{\mathrm{d}}{\mathrm{d}x} \hat{U}_\varphi^\dagger(x) \right) \hat{U}_A(\boldsymbol{\theta}) \right] - b\, \hat{C}\left[ \hat{U}_\varphi^\dagger(x_j)\, \hat{U}_A(\boldsymbol{\theta}) \right] - g(x_j) \right\| \tag{4}$$

where $\hat{\mathcal{C}}$ denotes some cost operator used in the measurement of the quantum state, and $\|.\|$ denotes a suitable norm. (In practice, the loss function may also contain a contribution for a boundary condition, which is omitted here for simplicity.)

If the loss value does not meet one or more optimization conditions, the variational parameters may be updated by an optimizer **112**. Thereafter, the quantum circuit may be executed using the updated variational parameters and the state of the quantum registered may be measured and a new loss value may be computed. These steps may be repeated until the one or more optimization conditions are met. The state of the optimized quantum circuit may represent an optimized approximation of a desired target function.

Thus. the logic gates of the quantum circuits used in the quantum machine learning scheme are parameterized by a set of trainable parameters $\theta$ which are trained by a classical optimizer to minimize a loss function. In general, these parametrized quantum circuits can be used as quantum machine learning models, applied to applications such as learning or generating an unknown distribution from a set of input features or solving differential equations.

**Fig. 1B** shows an example of a basic form of a quantum feature map, which is here illustrated as an example of a 'product' type feature map. In this example, the feature map **104$_1$** is implemented using single qubit rotations (here chosen as $R_Y(\boldsymbol{x})$) acting on each qubit individually and are parametrized by a function $\phi$ of variable $\boldsymbol{x}$ (i.e., $R_Y(\boldsymbol{x}) = R_Y(\phi(\boldsymbol{x}))$). Throughout this applications, qubits are used as standard example of quantum elements, but most arguments are equally applicable to systems with other quantum elements, e.g., qudits. The function $\phi$ is preferably a non-linear function. For a non-linear feature map encoding, the non-linear function $\phi(x)$ may be used as an angle of rotation. The application **122** of one rotation operation to each qubit in a register may be referred to as a single layer of rotation operations. A product feature map can be further generalized to several product layers, and different functions $\{\phi\}$; for example, several feature maps may be concatenated to represent a multivariable function. Measurement of the quantum state requires one measurement per encoding qubit. Depending on the quantum hardware, the qubits may be measured one-by-one, or all in a single measurement.

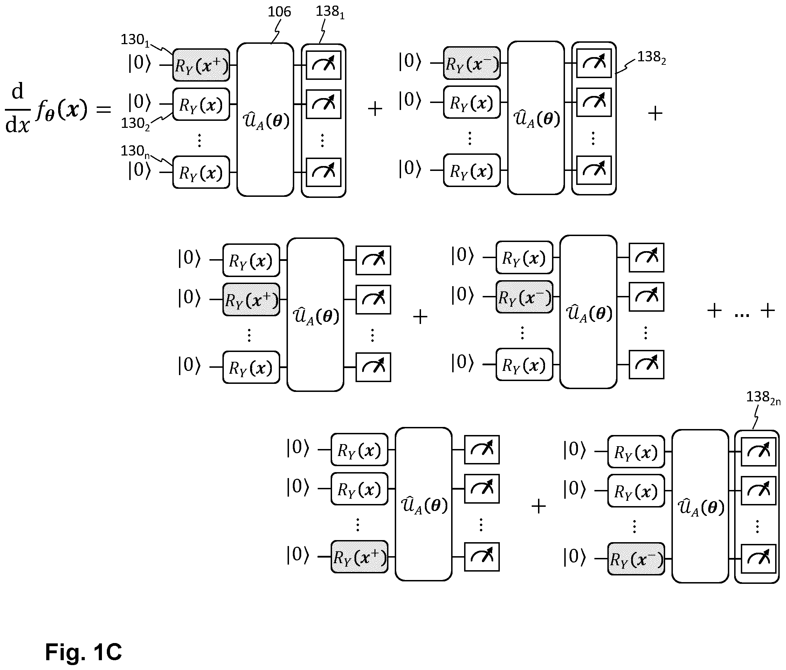

**Fig. 1C** illustrates an example of a derivative quantum circuit for the product feature map of **Fig. 1B**. Differentiation over variable $x$ follows the chain rule of differentiation, including qubit operations **132** with shifted phases (e.g., $R_Y(\phi(\boldsymbol{x}) \pm \pi/2)$). Here, the expectation value of the derivative is written as a sum of separate expectations with shifted phases, repeated for each x-dependent rotation **130$_{1\text{-}n}$**. (The rotations with shifted phases have been shaded.) Thus, the number of measurements for determining the derivative value is (at least) twice the number of encoding qubits, compared to a single measurement for the base function.

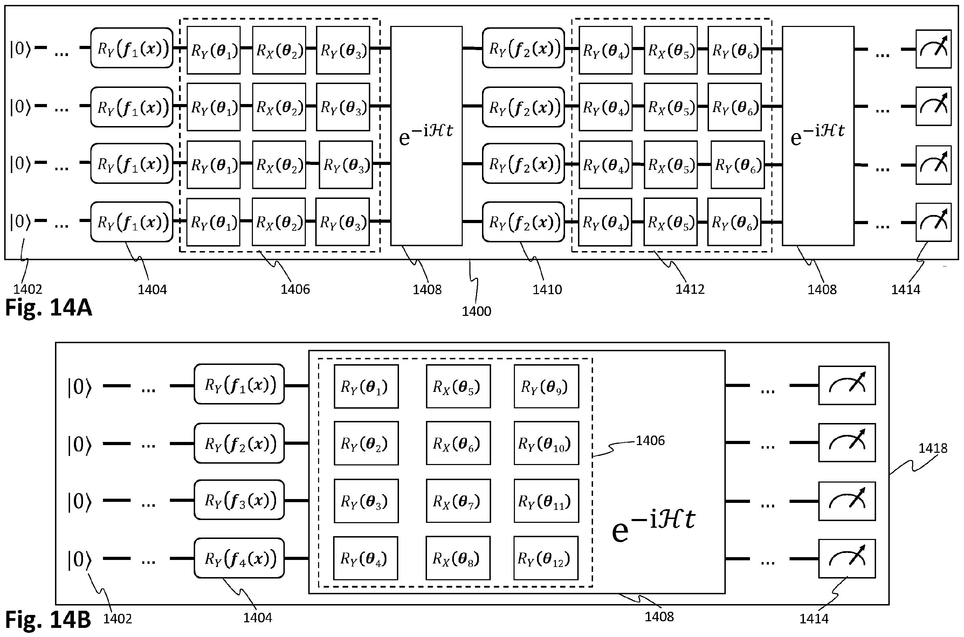

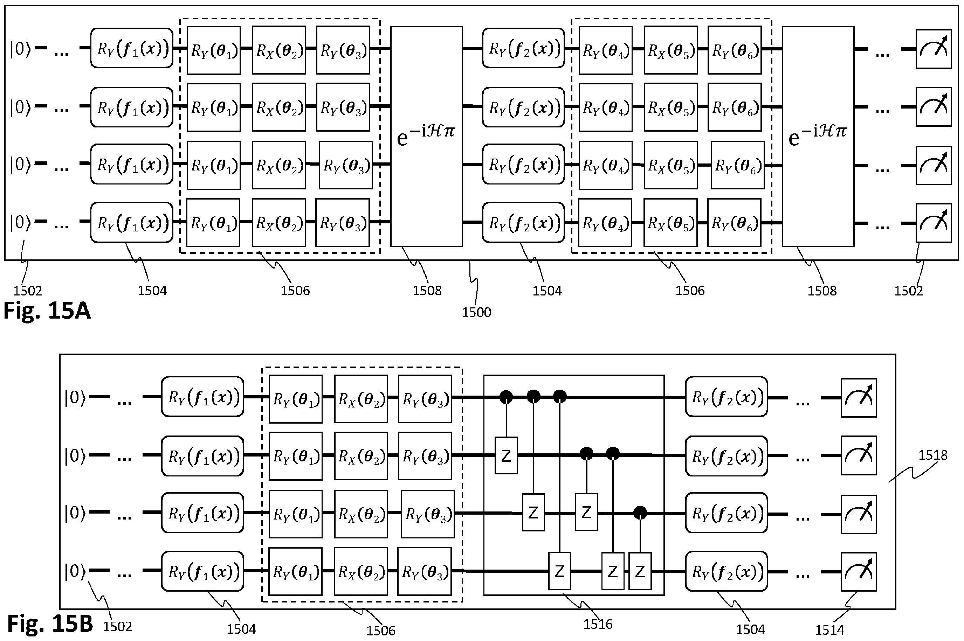

When data reuploading is used (as explained in more detail below with reference to **Figs. 14** and **15**), the number of measurements increases even further. The same is the case for more complicated feature maps, which may be necessary to approximate the solution of the differential equation with sufficient detail. In general, derivatives with respect to circuit inputs typically involves a measurement cost $\mathcal{O}(N^d)$, where $N$ is the number of data encodings into a quantum circuit, and d is the order of derivatives.

The methods described herein allow to reduce the order of derivatives with at least one for at least one input parameter. For linear (or linearizable) ordinary differential equations, the derivatives may be removed completely (except for derivatives on the boundary for higher-order differential equations).

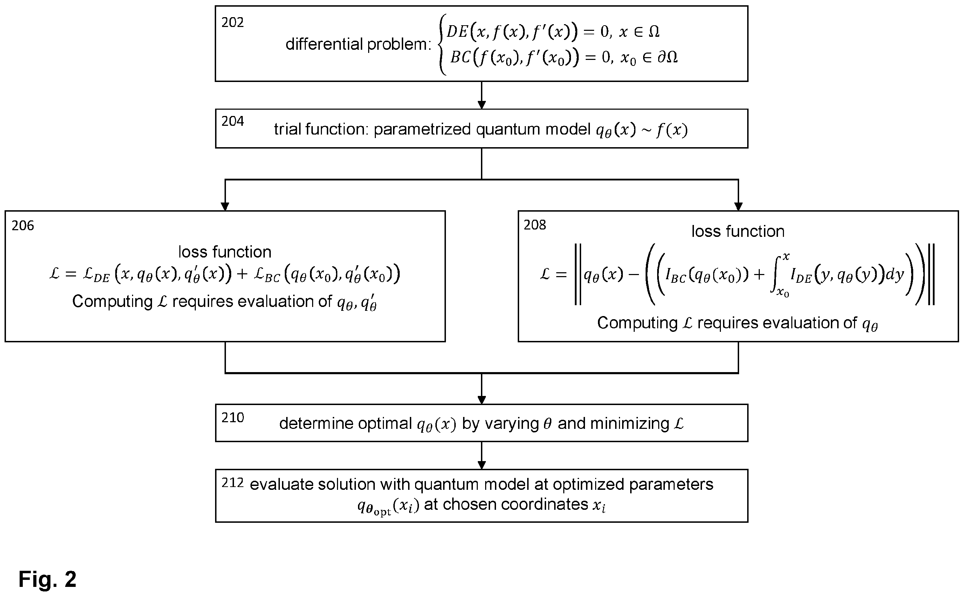

**Fig. 2** is a flowchart of method according to an embodiment in comparison with a prior art method. A step **202** comprises receiving or determining a differential problem. In general, a differential problem comprises a differential equation and a boundary condition, e.g., an initial value. In principle, the differential equation can be any type of differential equation, e.g., an ordinary differential equation (ODE), a partial differential equation (PDE), a stochastic differential equation (SDE), a delayed differential equation (DDE), et cetera. The differential equation may be linear or non-linear. The differential equation may be defined over a domain $\Omega$, and the boundary condition may be defined on (part of) the boundary $\partial\Omega$.

In general, the differential equation can be written as

$$DE\big(x, f(x), f'(x), ..., f^{(n)}\big) = 0, \ x \in \Omega \qquad (5)$$

with boundary condition

$$BC\big(f(x_0), f'(x_0), ..., f^{(n)}(x_0)\big) = 0, \ x_0 \in \partial\Omega \qquad (6)$$

For simplicity, the figure is limited to first-order derivatives. An even more general treatment is provided below.

A step **204** comprises receiving or determining information on one or more quantum circuits defining operations of a parameterized quantum model $q_\theta(x)$ of a trial function. Here, $x$ represents the independent variable(s) of the differential equation. The quantum model $q_\theta(x)$ may be parametrized by variational parameters $\theta$. For example, the quantum model can be a so-called quantum neural network (QNN) as described above with reference to **Fig. 1A.** In that example, the quantum model comprised an $x$-dependent feature map $\hat{U}_\varphi(x)$ and a parametrized variational Ansatz $\hat{U}_A(\theta)$ which is independent of $x$. The quantum model can also be a kernel model, an amplitude-encoding based model, or any other suitable quantum model.

A step **206** comprises receiving or determining a loss function as described in the prior art. In these methods, the loss function typically has two terms, an interior loss term $\mathcal{L}_{DE}$ based on the differential equation (for the interior of the domain), and a boundary loss term $\mathcal{L}_{BC}$ based on the boundary condition. The loss term based on the differential equation is typically obtained by writing the differential equation in the form $DE(x, f(x), f'(x), ..., f^{(n)}(x)) = 0$, and determining a distance from zero for the differential equation evaluated for the trial function at a number of collocation points $x_i$, usually

$$\mathcal{L}_{DE} = \sum_i \left( DE\left( x, q_\theta(x), q'_\theta(x), ..., q_\theta^{(n)}(x) \right) \right)^2. \tag{7}$$

Additionally, a (similarly derived) loss term is computed for the boundary condition, e.g.:

$$\mathcal{L}_{BC} = \left( BC\left( x_0, q_\theta(x_0), q'_\theta(x_0), ..., q_\theta^{(n)}(x_0) \right) \right)^2. \tag{8}$$

Consequently, evaluation of the loss function requires evaluation of all derivatives of the trial function that are present in the differential equation.

By contrast, step **208** comprises receiving or determining a loss function as described in the current disclosure. Instead of writing the differential equation in the form $DE(x, f(x), f'(x), ..., f^{(n)}(x)) = 0$, the highest-order derivative is isolated and the differential equation is written as $f^{(n)}(x) = I_{DE}(x, f(x), f'(x), ..., f^{(n-1)}(x))$. Subsequently, both sides of the equation are integrated to yield

$$f^{(n-1)}(x) = I_{BC}\left( f^{(n-1)}(x_0) \right) + \int_{x_0}^{x} I_{DE}\left( y, f(y), f'(y), ..., f^{(n-1)}(y) \right) dy \tag{9}$$

where $I_{BC}(f^{(n-1)}(x_0))$ is a term that depends on the boundary condition. The loss function typically represents a distance between the left-hand side and the right-hand side of this equation (9), for the trial function, e.g.:

$$\mathcal{L} = \sum_i \left\| q_\theta^{(n-1)}(x_i) - \left( I_{BC}\left( q_\theta^{(n-1)}(x_0) \right) + \int_{x_0}^{x_i} I_{DE}\left( y, q_\theta(y), q'_\theta(y), ..., q_\theta^{(n-1)}(y) \right) dy \right) \right\|. \tag{10}$$

Here, $\|...\|$ denotes a suitable norm, typically $\|y\| = y^2$ or $\|y\| = |y|$. Depending on the differential equation, the integration may be repeated to remove further derivatives. Thus, where the differential equation contained derivatives up to order $n$, and the prior art loss function likewise contained quantum circuit derivatives up to order $n$, the current loss function only comprises derivatives up to (at most) order $n - 1$ (in at least one of the independent variables). This reduces the number of measurements on the quantum circuit during each optimisation epoch. More explicit examples are given below, as well as a more general treatment.

A step **210** comprises determining optimal parameters $\theta_{opt}$ by minimizing the loss function. This requires varying the variational parameters and evaluating the quantum model $q_\theta$ (and/or its derivatives, as required by the loss function), until a stop criterion is met. Typical examples of stop criteria are: reaching a predetermined number of steps, obtaining a loss value smaller than a predetermined threshold value, and/or having a change in loss value that is (possibly on average over the last several optimisation steps) smaller than a predetermined threshold value. Several optimisation methods may be used, as will be discussed in more detail below. As an example, gradient-based methods may be used which compute or estimate a gradient of the quantum model with respect to the variational parameters. Methods which use very few measurements (e.g., one or two) to estimate the gradient, are sometimes referred to as gradient-free methods. As a further example, population-based methods may be used. A population-based method may comprise determining an initial ('parent') population of initial sets of variational parameters with associated loss values and determining a further ('child') population of adjusted sets of variational parameters based on the initial sets of variational parameters and the associated loss values.

An optional step **212** comprises evaluating the solution using the quantum model $q_{\theta_{opt}}$ with the optimised

parameters $\theta_{\text{opt}}$ for one or more points $x \in \Omega$. These evaluation points do not need to coincide with the collocation points.

**Fig. 3A** illustrates a method of solving a differential problem using a variational quantum circuit (VQC) using a known method. The differential problem comprises a differential equation $\dfrac{\partial y(t)}{\partial t} + F(y(t), t) = 0$ and a boundary condition $y(0) = y_0$. It is noted that $F$ can be a very generic function, possibly comprising (partial) derivatives to other variables, as would be the case for a generic partial differential equation. Similarly, the function $y(t)$ may itself contain derivatives with respect to $t$ (effectively representing a higher-order differential equation) and/or other variables. For simplicity, a Dirichlet boundary condition is used, but the method works analogously for other types of boundary conditions.

The variational quantum circuit encodes a parametrized trial function $q_\theta(t)$, represented in the figure by the solid line **302**. For a given set of variational parameters $\theta$, the trial function is evaluated at each of a plurality of collocation points $t_i$ **304$_{0\text{-}6}$**. In this example, the collocation points are distributed evenly, but in other embodiments, selection of the collocation points may have a random component. Evaluation of the trial function is a stochastic process, and for each collocation point, several measurements **306$_{1\text{-}8}$** have to be made to obtain an expectation value **308**. Additionally, for each collocation point, the gradient **310** has to be calculated (represented by the approximately tangent line segments **310$_{1\text{-}8}$**). As explained above with reference to **Fig. 1A-C,** this has a high computational cost for quantum circuits, requiring a large amount of shots. Again, the measurement has to be repeated numerous times to obtain an expectation value **312**.

Thus, the quantum processor computes the values $\{q_\theta(t_i), q'_\theta(t_i)\}_{i=0}^N$ for each of a number of collocation points $t_i$, $i = 0, ..., N$. These values are then used by the classical computer to compute the loss value, based on the measurements on the quantum processor and the differential equation. Typically, the loss function is given by

$$\mathcal{L} = w \sum_{i=0}^N \left( q'_\theta(t_i) + F(q_\theta(t_i), t_i) \right)^2 + (1 - w)(q_\theta(t_0) - y_0)^2 \qquad (11)$$

where w represents a weight for the relative contributions of the interior and the boundary. Based on the loss function, the parameters $\theta$ may be varied and the entire process may be repeated until some stop criterion has been met.

Similar considerations may apply to different types of variational models, including classical neural networks, spiking neural networks, and other physics- or biology-informed models.

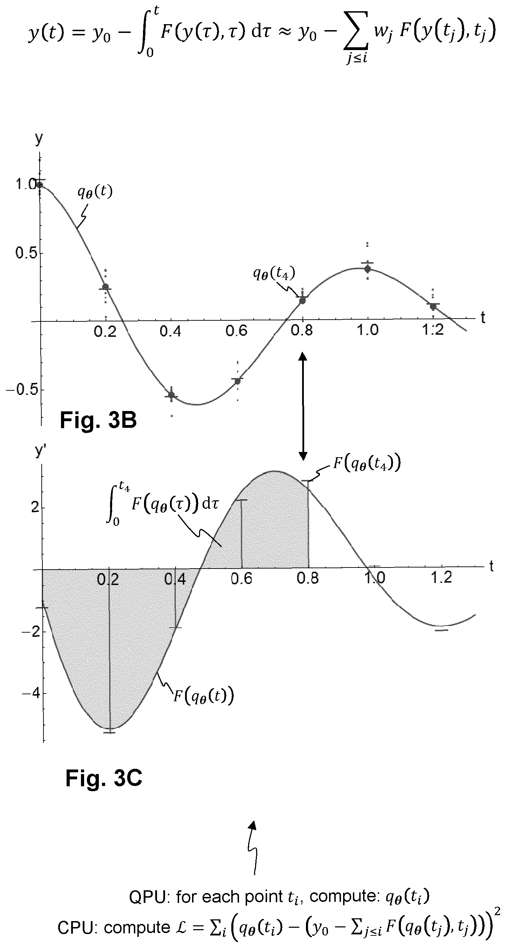

**Fig. 3B** illustrates a method of solving a differential equation using a variational quantum circuit (VQC) according to an embodiment. Similar to the known case, the variational quantum circuit encodes a parametrized trial function $q_\theta(t)$ (possibly the same), represented in the figure by the solid line **322**. Again, for a given set of variational parameters $\theta$, the trial function is repeatedly evaluated at each of the plurality of collocation points $t_i$ **304$_{0\text{-}6}$** to obtain the expectation value **308**. However, in this case, there is no need to compute the gradient. Instead, the differential equation is 'manually' integrated to obtain an integral form of the differential equation. The integral form depends on both the differential equation and the boundary condition(s). The integral form comprises a definite integral along a path from a boundary to the collocation point being evaluated. This is also known as a Volterra integral. This integral can be computed numerically, generally in the form of a (possibly weighted) sum over all collocation points on the path between the boundary and the collocation point under consideration.

This is shown schematically in **Fig. 3C.** The function $F(q_\theta(t), t)$ (which is given as part of the differential problem, or derived therefrom) is represented by the solid line **332**. The definite integral with integration limits obtained form the boundary condition (in this example, 0) and the collocation point under consideration (in this example, $t_4$), i.e., $\int_0^{t_4} F\left(q_\theta(\tau)\right) d\tau$, is equal to the area **334** under the curve defined by $F(q_\theta(t), t)$ between the boundary ($t = 0$) and the collocation point ($t = t_4$). This integral can be approximated using the function values for the collocation points between the boundary and the collocation point under consideration. For example,

$$\int_0^{t_i} F\left(y(\tau), \tau\right) d\tau \approx \sum_{j \le i} w_j \, F\left(y(t_j), t_j\right) \qquad (12)$$

where the collocation points are assumed to be ordered, i.e., $j < i \Rightarrow t_j < i$, where $w_j$ are weighing factors. For instance, for equidistant collocation points, typically $w_j = t_i/i$ for $0 < j < i$ and $w_j = t_i/2i$ for $j = 0$ and $j = i$. Other numerical integration methods may use differently-defined sums, e.g., Monte Carlo-based methods, quasi-Monte Carlo-based methods, quantum-Monte Carlo-based methods, a method based on midpoint rules, quadrature-based methods, et cetera.

As shown in **Fig. 3C**, the inherent uncertainty in $q_\theta(t)$ leads to a corresponding uncertainty in $F(q_\theta(t), t)$; as a result, the values determined based on the measurements do not coincide exactly with the theoretical curve. As the integral is based on all collocation points between the boundary and the collocation point under consideration, part of this uncertainty may be averaged out. In other words, as the value of the integral relies on an averaging of points to the left of $t_4$ to calculate the area, noise in each collocation point can be "averaged out" with noise from other collocation points. This represents a further advantage in terms of optimising quantum neural networks with finite shots.

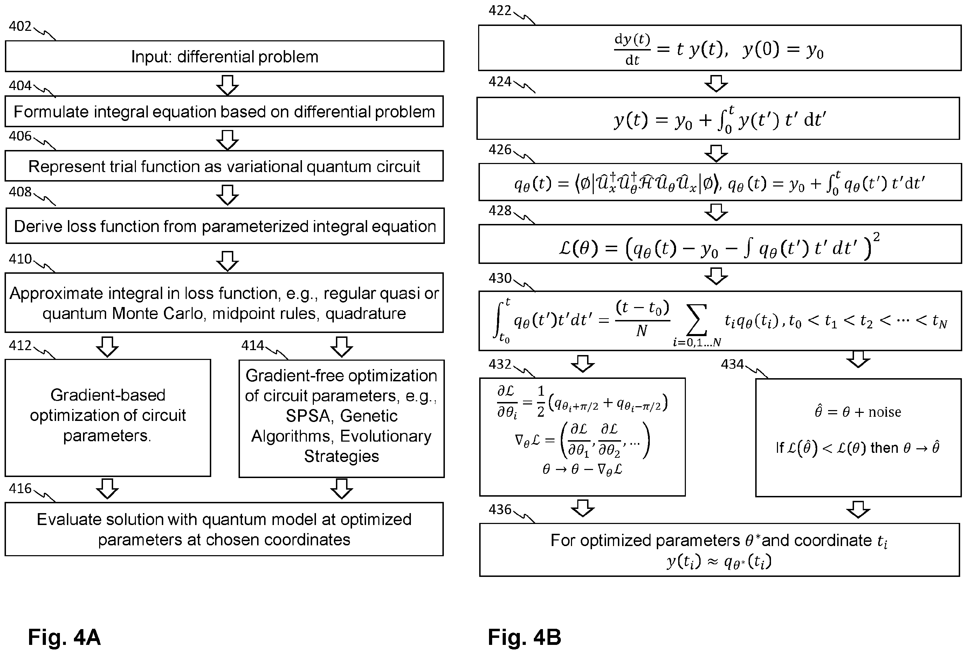

**Fig. 4A** and **4B** schematically describe a method according to an embodiment. **Fig. 4A** describes various methods steps, whereas **Fig. 4B** provides a practical example. A first step **402** comprises receiving information related to a differential problem. The differential problem comprises a differential equation defined on a domain and at least one boundary condition defined on at least part of the boundary of the domain. The differential equation can be an ordinary differential equation, a partial differential equation, or a mixed-type equation. The differential equation can be a first-order equation or a higher-order equation. The differential equation can be a linear differential equation, a non-linear equation, or a combination (e.g., linear in first variable and non-linear in a second variable).

For example, a step **422** comprises receiving a linear first-order ordinary differential equation

$$\frac{dy(t)}{dt} = t\, y(t),\ y(0) = y_0,\ t \in [0, T]. \tag{13}$$

More in general, the differential problem may comprise or be formulated as a first-order ordinary differential equation

$$\frac{dy(t)}{dt} = F(y(t), t),\ y(0) = y_0,\ t \in [0, T] \tag{14}$$

where the boundary condition $y(0) = y_0$ defines an initial condition.

A step **404** comprises receiving or determining an integral equation based on the differential equation and on the at least one boundary condition. The integral equation is an equation with a differential order that is smaller with respect to at least one independent variable of the differential equation than the differential order of the differential equation with respect to the at least one independent variable. Thus, a first-order ordinary differential equation results in an integral equation with no derivatives. In general, linear (or linearizable) higher-order ordinary differential equations may lead to an integral equation with no derivatives (apart from, possibly, the boundary). Other differential equations may result in an integro-differential equation comprising at least one integral and on or more derivatives.

The integral formulation is based on the boundary condition. For example, the integral equation may comprise a boundary value (initial value), and/or one or more of the integration limits may be based on the one or more boundary conditions. In general, the integral equation can be obtained by integrating the differential equation one or more times with respect to one or more independent variables. Typically, the integral formulation incorporates at least part of the at least boundary condition, with the integral formulation comprising a path integral with a first integration limit corresponding to a point on the boundary and a second integration limit corresponding to a point in the domain.

For example, a step **424** comprises determining an integral equation

$$y(t) = y_0 + \int_0^t F(y(t'), t')\, dt' \tag{15}$$

based on the differential equation received in step **422.** More in general, both sides of the differential equation (14) may be integrated to yield:

$$y(t) = y_0 + \int_0^t F(y(t'), t')\, dt' \tag{16}$$

(this is essentially the fundamental theorem of calculus).

A step **406** comprises receiving or determining information on one or more quantum circuits defining operations of a parameterized quantum model of a trial function parametrized by variational parameters. By optimising the variational parameters, a solution to the differential problem is obtained.

For example (step **426**), a variational quantum circuit may be defined by:

$$q_\theta(t) = \langle \emptyset | \hat{U}_\phi^\dagger(t)\, \hat{U}_\theta^\dagger\, \hat{\mathcal{H}}\, \hat{U}_\theta\, \hat{U}_\phi(t) | \emptyset \rangle. \tag{17}$$

Based on equation (16), the solution should obey the equation:

$$q_{\theta_{\mathrm{sol}}}(t) = y_0 + \int_0^t F\big(q_{\theta_{\mathrm{sol}}}(t'), t'\big)\, dt' \tag{18}$$

where $\theta_{\mathrm{sol}}$ represents the parameters for which $q_\theta$ solves the differential equation.

To that end, a step **408** comprises receiving or determining a loss function associated with the integral formulation of the differential problem. Evaluation of the loss function comprises computation of the integral.

For example, the loss function may be defined by:

$$\mathcal{L}(\boldsymbol{\theta}) = \sum_{i=1}^{N} \left\| q_{\boldsymbol{\theta}}(t_i) - \left( y_0 + \int_0^{t_i} F\big(q_{\theta_\theta}(t'), t'\big)\, dt' \right) \right\|, \qquad t_i \in [0, T] \tag{19}$$

where $\|\cdot\|$ denotes a suitable norm, e.g., the 2-norm. Typically, $\|y\| = y^2$.

Generally, the integral is approximated by a sum. In principle, any suitable known numerical method to evaluate the integral may be used. For example, a regular Monte Carlo-based method, a quasi-Monte Carlo-based method, a quantum Monte Carlo-based method, a method based on midpoint rules, or a quadrature-based method. Which integration method is suitable, may depend on the particulars of the problem, such as the dimensionality, the smoothness of the integrand, et cetera.

$$q_{\boldsymbol{\theta}}(t_n) \approx y_0 + \frac{t_n}{n} \sum_{i=0}^{n} F(q_{\boldsymbol{\theta}}(t_i), t_i), \qquad \begin{array}{l} t_0 = 0,\ t_N = T \\ i < j \Rightarrow t_i < t_j \end{array} \tag{20}$$

Alternatively, this can be written in a recursive way, as:

$$q_{\boldsymbol{\theta}}(t_n) \approx \frac{n-1}{t_{n-1}} \frac{t_n}{n} q_{\boldsymbol{\theta}}(t_{n-1}) + \frac{t_n}{n} F(q_{\boldsymbol{\theta}}(t_{n-1}), t_{n-1}) \tag{21}$$

such that evaluation of a function value is based on the previous function values along a path from the boundary to the point in which the function is being evaluated.

Combining equations. (19) and (20) yields:

$$\mathcal{L}(\theta) = \sum_{n=1}^{N} \left\| q_{\boldsymbol{\theta}}(t_n) - \left( y_0 + \frac{t_n}{n} \sum_{i=0}^{n-1} F(q_{\boldsymbol{\theta}}(t_i), t_i) \right) \right\| \tag{22}$$

Thus, evaluation of the loss function for a point under consideration in the domain comprises computation of the integral, with the computation of the integral being based on one or more collocation points between the point on the boundary and the point under consideration.

Given the variational quantum model and the loss function, in a step **412,414,** the variational parameters are optimized. In principle, any suitable optimisation method may be used. Roughly speaking, two classes of optimisation methods may be distinguished: gradient-based optimisation methods (step **412**) and gradient-free optimisation methods (step **414**), such as SPSA, genetic algorithms, evolutionary strategies, et cetera.

For example, step **432** shows the computation of a analytical derivative of the variational quantum circuit with respect to the variational parameter(s), determining the gradient of the loss function with respect to the variational parameters, and varying the variational parameters based on the determined loss function gradient. As a different example, step **434** shows varying the variational parameters with a random component to obtain a new variational parameter, comparing a new loss value for the new variational parameters with the current loss value based for the current variational parameter, and updating the variational parameter if the new loss value is lower than the current loss value.

The optimisation may halt when a suitable stopping criterion has been met, e.g., when the loss value is smaller than a threshold value and/or when an (possibly averaged) change in the loss value is smaller than a threshold value. The corresponding optimised parameter values $\theta_{\mathrm{sol}}$ can then be used to obtain the solution function, which obeys:

$$q_{\boldsymbol{\theta}_{\mathrm{sol}}}(t) = y_0 + \int_0^t F\big(q_{\boldsymbol{\theta}_{\mathrm{sol}}}(t'), t'\big)\, dt' \qquad (23)$$

An optional step **416** comprises evaluating the solution, using the quantum model with optimised parameters for one or more chosen input variables (typically in the domain). For example (step **436**), the function value $y(t_i)$, $t_i \in [0, T]$ may be evaluated as $q_{\theta}*(t_i)$, where $\theta^*$ represent the optimised variational parameter.

Some specific examples are provided below. As mentioned above, a loss function can be obtained from an equation by substituting the parametrized quantum model representing the trial function for the (unknown) solution and computing a norm of a difference between the left-hand side and the right-hand side of the equation.

First-order ODE, Dirichlet BC:

$$\frac{dy(t)}{dt} = F(y(t), t), \ y(0) = y_0, \ t \in [0, T] \qquad (24)$$

$$y(t) = y_0 + \int_0^t F(y(t'), t')\, dt' \qquad (25)$$

First-order ODE, Neumann BC:

$$\frac{dy(t)}{dt} = F(y(t), t), \ \frac{dy(0)}{dt} = y_0', \ t \in [0, T] \qquad (26)$$

$$y(t) = -y(0) + y_0'\, t + \int_0^t \int_0^{t'} F(y(t''), t'')\, dt''\, dt' \qquad (27)$$

Second-order ODE (without first-order terms), Cauchy BC:

$$\frac{d^2 y(t)}{dt^2} = F(y(t), t), \ \frac{dy(0)}{dt} = y_0', y(0) = y_0, \ t \in [0, T] \qquad (28)$$

$$y(t) = y_0 + y_0'\, t + \int_0^t \int_0^{t'} F(y(t''), t'')\, dt''\, dt' \qquad (29)$$

Linear second-order ODE, Cauchy BC:

$$\frac{d^2 y(t)}{dt^2} = \alpha\, \frac{dy(t)}{dt} + \beta\, y(t) + \gamma\, t, \ \frac{dy(0)}{dt} = y_0', y(0) = y_0, \ t \in [0, T] \qquad (30)$$

$$y(t) = y_0 + y_0'\, t + \int_0^t \left( \alpha\, y(t') + \int_0^{t'} (\beta\, y(t'') + \gamma\, t'')\, dt'' \right) dt' \qquad (31)$$

Second-order ODE (with generic first-order terms), Cauchy BC:

$$\frac{\mathrm{d}^2 y(t)}{\mathrm{d}t^2} = F\left(\frac{\mathrm{d}y(t)}{\mathrm{d}t}, y(t), t\right), \frac{\mathrm{d}y(0)}{\mathrm{d}t} = y_0', y(0) = y_0, \ t \in [0, T] \tag{32}$$

$$y(t) = y_0 + y_0' \, t + \int_0^t \int_0^{t'} F\left(\frac{\mathrm{d}y(t'')}{\mathrm{d}t''}, y(t''), t''\right) \mathrm{d}t'' \, \mathrm{d}t' \tag{33}$$

or:

$$\frac{\mathrm{d}y(t)}{\mathrm{d}t} = y_0' \, t + \int_0^t F\left(\frac{\mathrm{d}y(t')}{\mathrm{d}t'}, y(t'), t'\right) \mathrm{d}t' \tag{34}$$

First-order PDE:

$$\frac{\partial}{\partial x} f(x, y) + \frac{\partial}{\partial y} f(x, y) = g(x, y), \ f(x_0, y) = h^x(y), f(x, y_0) = h^y(x) \tag{35}$$

$$\int_0^x \left(h^y(x') + f(x', y)\right) \mathrm{d}x' + \int_0^y \left(h^x(y') + f(x, y')\right) \mathrm{d}y' = \int_0^x \int_0^y g(x', y') \, \mathrm{d}y' \, \mathrm{d}x' \tag{36}$$

In some cases, the differential problem may define more than one differential equation. For example, the differential problem may define partial differential equations with respect to a plurality of independent variables. As a further example, a higher-order differential equation $\frac{\mathrm{d}^2 y(t)}{\mathrm{d}t^2} = g(y, t)$ can be written as the paired ODEs $\frac{\mathrm{d}y}{\mathrm{d}t} = z$ and $\frac{\mathrm{d}z}{\mathrm{d}t} = g(y, t)$. In such cases, one of the differential equations may be solves as described herein, while another differential equations is solved using a different method, for example using differentiable quantum circuits (DQC) as described in WO 2022/101483 A1 -which is hereby incorporated by reference in its entirety-, or amplitude-based methods as described in co-pending application EP23186602.1 -which is hereby incorporated by reference in its entirety. Depending on the differential problem, it may also be possible to solve all differential equations according to embodiments described herein.

In the following, a more general treatment is provided for deriving an integral formulation based on a differential problem. A general differential problem of a dependent variable $u : \mathbb{R}^n \to \mathbb{R}^d$ in an open set (domain) $\Omega \subset \mathbb{R}^n$ with boundary $\partial\Omega$ can be written as follows:

$$\mathcal{N}u(x) = 0 \ \text{if} \ x \in \Omega, \qquad \mathcal{B}u(x) = 0 \ \text{if} \ x \in \partial\Omega \tag{37}$$

where $\mathcal{N}$ and $\mathcal{B}$ are (potentially non-linear) differential operators. Note that since $\mathcal{N}$ is an arbitrary differential operator, equation (37) can represent a rich class of differential equations including partial differential equations (PDEs), ordinary differential equations (ODEs) and delay differential equations (DDEs), to name but a few.

A solution of equation (37) can be approximated by training a neural network $f_\theta(x) : \mathbb{R}^n \to \mathbb{R}^d$, where $\theta$ represents a set of trainable parameters.

Define probability distributions $\mathbb{P}_\Omega$ and $\mathbb{P}_{\partial\Omega}$ over $\Omega$ and $\partial\Omega$. Samples from these distributions are referred to as collocation points. The optimisation of PINNs constructs weights $\theta^*$ (such that $f_{\theta^*}(x)$ represents the solution to the differential problem) using the following losses and optimisation problem:

$$\mathcal{L}_{\mathcal{N}}(\boldsymbol{\theta}) = \mathbb{E}_{x \sim P_{\Omega}} \left[ \mathcal{N}\big(f_{\boldsymbol{\theta}}(x)\big)^2 \right]$$

$$\mathcal{L}_{\mathcal{B}}(\boldsymbol{\theta}) = \mathbb{E}_{x \sim P_{\partial\Omega}} \left[ \mathcal{B}\big(f_{\boldsymbol{\theta}}(x)\big)^2 \right] \qquad (38)$$

$$\boldsymbol{\theta}^* = \underset{\boldsymbol{\theta}}{\mathrm{argmin}}\big(\mathcal{L}_{\mathcal{N}}(\boldsymbol{\theta}) + \mathcal{L}_{\mathcal{B}}(\boldsymbol{\theta})\big)$$

So far, hardly any restrictions have been placed on the architecture represented by $f_{\theta}(x)$. Consequently, the optimisation problem in equation (38) applies equally to quantum neural networks as it does to classical neural networks. While in classical neural networks, the output of differential operators can be evaluated at collocation points via automatic differentiation, the same can be achieved in quantum neural networks via the parameter-shift rule (PSR), which might be seen as a quantum version of forward-mode automatic differentiation.

For (digital) quantum neural networks, data and network weights are typically encoded via a rotation on a given qubit. Derivatives with respect to these encodings typically involve two additional circuit constructions per encoding. For $N$ data encodings, and $d$-th order derivatives, the number of circuits needed to evaluated the $d$-th order derivative thus scales as $\mathcal{O}\big(N^d\big)$, incurring significant number of circuit evaluations.

Moreover, local optimisation can lead to a waste of resources if the boundary conditions are not properly taken into account, as it may lead to (local) convergence in a 'wrong' local minimum.

Therefore, the embodiments in this disclosure use a methodology to construct line integrals which propagate boundary conditions from the boundary $\partial\Omega$ into the domain $\Omega$. For an invertible differential operator $\mathcal{N}_B$, where the suffix denotes its significance in propagating a boundary condition, equation (37) gives:

$$u \approx \mathcal{N}_B^{-1}\big[(\mathcal{N}_B - \mathcal{N})\, f_{\boldsymbol{\theta}}\big] \qquad (39)$$

which follows from noting $(\mathcal{N} - \mathcal{N}_B + \mathcal{N}_B)\, u \;=\; 0$ from equation (37), substituting a neural network $f_\theta$ for $u$, and gathering terms.

Introduce a probability distribution $\mathbb{P}_L$ of straight lines starting from points on boundary $\partial\Omega$ going into domain $\Omega$, and a probability distribution $\mathbb{P}_l$ of points along a given line $l$. This allows for the following optimisation problem to be defined:

$$\boldsymbol{\theta}^* = \underset{\boldsymbol{\theta}}{\mathrm{argmin}}\, \mathbb{E}_{l \sim \mathbb{P}_L} \left[ \mathbb{E}_{x \sim \mathbb{P}_l}\big[(f_{\boldsymbol{\theta}}(x) - \mathcal{N}_B^{-1}\big[(\mathcal{N}_B - \mathcal{N})\, f_{\boldsymbol{\theta}}\big](x))^2\big] \right] \qquad (40)$$

where $\theta^*$ is a parameterisation of $f_\theta$ which solves the differential equation.

Now it remains to define operators $\mathcal{N}_B$ which propagate boundary conditions from $\partial\Omega$ to $\Omega$.

A Dirichlet boundary condition is a boundary condition on the target function. When the differential problem comprises such a boundary condition, a point $x_0 \in \partial\Omega$ may be selected with boundary condition $u(x_0) = u_0$. Then, a line $x_s = x_0 + s\, v$ may be parametrised, where $s \in [0,S]$, $v$ is a direction into $\Omega$ from $\partial\Omega$ and $x_s \in \Omega$ for all $0 < s < S$. Then a choice of $\mathcal{N}_B = \dfrac{\partial}{\partial x_s}$ yields that:

$$u(x) = \mathcal{N}_B^{-1}\big[(\mathcal{N}_B - \mathcal{N})\, u\big](x) = u_0 + \int_{x_0}^{x} \big[(\mathcal{N}_B - \mathcal{N})\, u\big](x')\, \mathrm{d}x' \qquad (41)$$

where $x$ is a point on the line and the integral represents a line integral along $x_s$ from $x_0$ to $x$. Now $u$ in the integrand can be parametrised with a parametrised function $f_\theta$, such as a neural network, which then defines the Volterra integral equations to be used in the optimisation problem in equation (40).

A Neumann boundary conditions is a boundary condition on the derivative of the target function. When the differential problem comprises such a boundary condition, a point and parametrised line can be selected as explained above for the Dirichlet boundary condition. However, instead of the Dirichlet boundary condition, the Neumann boundary condition can take the form $\nabla_v u|_{x_0} = u_0'$ , where $\nabla_v$ denotes a directional derivative towards $v$.

Then a choice of $\mathcal{N}_B = \frac{\partial^2}{\partial x_s^2}$ gives:

$$u(x) = \mathcal{N}_B^{-1}[(\mathcal{N}_B - \mathcal{N})\, u](x) = u_0 + s\, u_0' + \int_{x_0}^{x} \int_{x_0}^{x'} [(\mathcal{N}_B - \mathcal{N})\, u](x'')\, \mathrm{d}x''\, \mathrm{d}x' \qquad (42)$$

where, as previously, $x$ is a point on the parametrised line and the integral represents a line integral along $x_s$ from $x_0$ to $x$. As before, $u$ in the integrand can be parametrised with a neural network $f_\theta$. However, in this scenario, since the boundary condition is a Neumann condition, $f_\theta(0)$ is substituted in for $u_0$ in equation (42) to avoid biasing the resulting loss function towards any specific Dirichlet condition. The resulting expression then defines the line integrals to be optimised upon in equation (40).

The formulation of boundary propagated differential equation losses provides several benefits:

1) The boundary condition and interior terms-which are summed and weighted as separate terms in traditional PINN formulations-are combined into a single term.

2) Boundary conditions are propagated into $\Omega$ from $\partial\Omega$ via a loss derived directly from the underlying differential equation. This contrasts to PINNs which optimise points independently of one another.

3) Dependent on the specific forms of $\mathcal{N}_B$ and $\mathcal{N}$ , we can achieve a reduction in the order of automatic differentiation in the optimisation of equation (40) compared to equation (38). In the case of many ODEs, higher-order (automatic) differentiation is not required at all.

4) If the evaluation of $f_\theta(x_i)$ is stochastic, as in the measurement of a quantum neural network, then a (quasi) Monte-Carlo estimation of the integral averages noisy evaluations across the integral domain.

The integral in equation (41) is evaluated numerically. This can be done by sampling points $x_i$ along the line $x_s$, computing $[\mathcal{N}_B - \mathcal{N}]\, f_\theta(x_i)$ via automatic differentiation, and then numerically approximating the integral via, e.g., Monte-Carlo integration, trapezoidal approximations, or quantum-enhanced Monte-Carlo integration. Given $L$ different lines emanating from $\partial\Omega$, each evaluated at $N$ different points, the computational complexity of the evaluation of the line integrals is $\mathcal{O}(NL)$. This is the same order of computational complexity as the evaluation of a standard physics-informed loss at $NL$ different points. Finally, the integral in equation (42) represents a double line integral, as opposed to a surface integral. This can be calculated by repeating an integral estimation twice. Thus, the evaluation of Neumann boundary integrals of the form in equation (42), even though nested, remains of the order $\mathcal{O}(NL)$.

The formulations of loss functions to impose Dirichlet and Neumann boundaries are not unique. For example, equation (42) can be used to regularise to Dirichlet boundary conditions by including Dirichlet boundaries for $u_0$ and substituting $f_\theta'$ for $u_0'$ .

While the methodologies described above apply to a broad class of differential equations, a particular instance of that methodology is of particular relevance to ODEs. Consider an ODE defined by:

$$\mathcal{N} = \frac{\mathrm{d}u(t)}{\mathrm{d}t} - g(u(t), t) = 0, \qquad u(0) = 0, \qquad 0 < t < T \qquad (43)$$

with $u : \mathbb{R} \to \mathbb{R}^d,\ d \in \mathbb{N}$. Note that the this formulation encompasses non-linear initial-value problems of arbitrarily high order since an $n$-th order initial-value problem can be rewritten as a set of $n$-coupled first-order initial-value problems. For example, $\frac{\mathrm{d}^2 y(t)}{\mathrm{d}t^2} = g(y, t)$ can be written as the paired ODEs $\frac{\mathrm{d}y}{\mathrm{d}t} = z$ and $\frac{\mathrm{d}z}{\mathrm{d}t} = g(y, t)$ .

Since the boundary condition in this case comprises a single line, the probability distribution $\mathbb{P}_L$ in equation

(40) comprises a single line. We denote a probability distribution of time between 0 and $T$ by $\mathbb{P}_t$. Parameterising a solution to equation (43) with a neural network $f_\theta$ and combining equation (41), equation (40) then yields the following optimisation problem to solve for the differential equation:

$$\theta^* = \operatorname*{argmin}_{\theta} \mathbb{E}_{l \sim \mathbb{P}_t} \left[\left[\left(f_\theta(t) - \int_0^t g(f_\theta(t'), t')\, \mathrm{d}t'\right)^2\right]\right] \tag{44}$$

There are no derivatives of the $f_\theta$ with respect to its input $t$, in contrast to the optimisation problem used in traditional PINN formulations outlined in equation (38). The optimisation problem in equation (44) can be obtained directly from equation (43) by manually integrating with respect to time on both sides. However, the general formulation provided above applies to a larger class of differential equations.

The removal of higher-order neural network derivatives from the optimisation problem in equation (44) compared to regular PINNs is of especially large significance in solving differential equations with quantum circuits. Combining the lack of requirements of higher-order derivatives with gradient-free optimisation allows for a near arbitrary choice of quantum hardware to solve ordinary differential equations. Since finding the $d$-th order derivative of a quantum neural network with $N$ feature-encodings requires $\mathcal{O}(N^d)$ evaluations, this method thus provides (at least) an $\mathcal{O}(N)$ reduction in the number of quantum neural network shots per training step.

Quantum circuit inputs, whether they are weights or features, are typically encoded as rotations on qubits. Since a circuit output is stochastic, a quantum circuit is typically evaluated a number of times, say $N$, to achieve an estimate of the output. The gradients of quantum circuits with respect to their input features can be calculated via the parameter-shift rule, which typically requires the evaluation of $2E$ circuits, where $E$ is the number of times a feature is encoded into the circuit. If $W$ represents the number of weights encoded into the circuit, then similarly $2W$ circuit evaluations are needed to estimate the gradient with respect to the weights. If evaluated at $C$ different collocation points, then a quantum physics-informed neural network (qPINN), $q_\theta(t)$, requires $CN(1 + 2E + 2W + 4EW)$ circuit evaluations, corresponding to evaluations of $q_\theta(t)$, $\dfrac{\mathrm{d}q_\theta(t)}{\mathrm{d}t}$, $\nabla_\theta q_\theta(t)$, and $\nabla_\theta \dfrac{\mathrm{d}q_\theta(t)}{\mathrm{d}t}$ per training epoch for a gradient-based optimisation.

In contrast, the propagated training objective outlined in equation (44) does not require derivatives with respect to $t$, and thus requires $CN(1 + 2W)$ circuit evaluations per epoch. Thus, in the context of quantum circuit learning for differential equations, the benefit of equation (44) over qPINNs increases with increasing $E$ (i.e., the number of feature encodings).

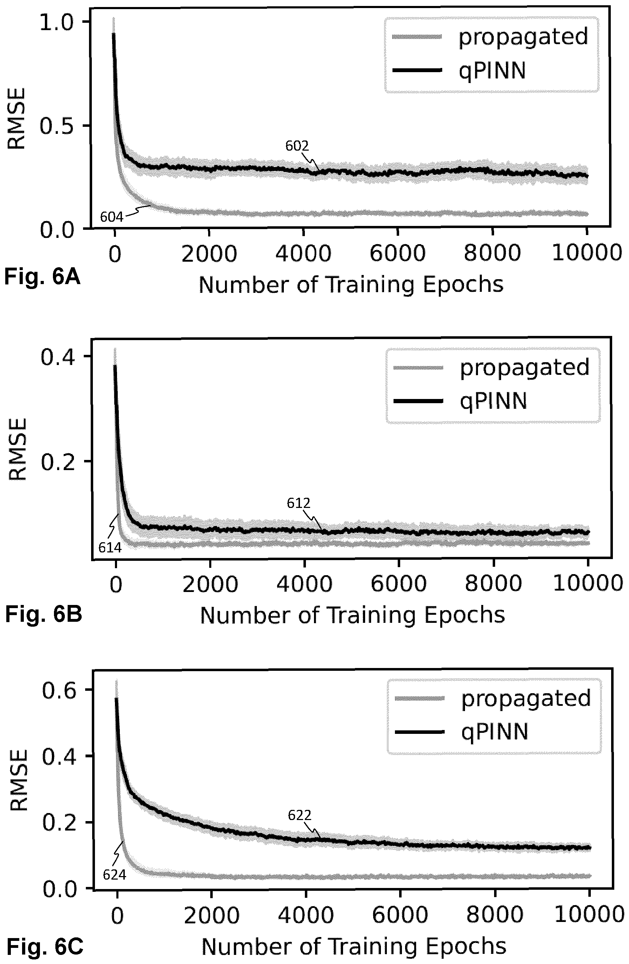

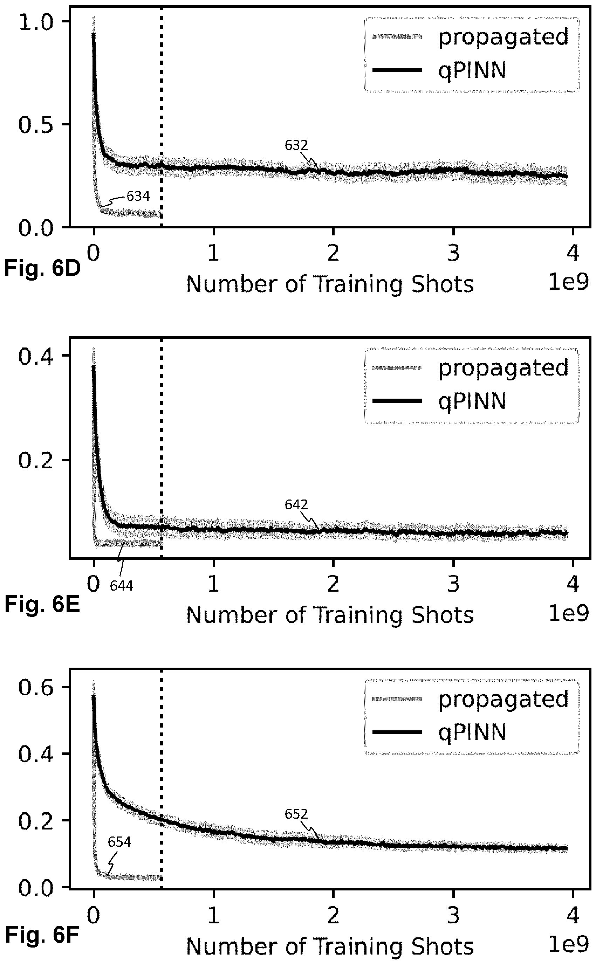

**Figs. 6-10** present examples of homogeneous, non-homogeneous and non-linear ordinary differential equations with applications in population modelling. The experimental setups are achievable on near-term (NISQ) quantum hardware. While the methods described above apply to multiple types of differential equations and can be used to remove higher-order automatic differentiation requirements for some PDEs, this section demonstrates the applicability of method to ODEs.

The methodologies also apply to almost arbitrary neural network architectures (including neural networks on classical computers), including multilayer perceptrons and spiking neural networks.

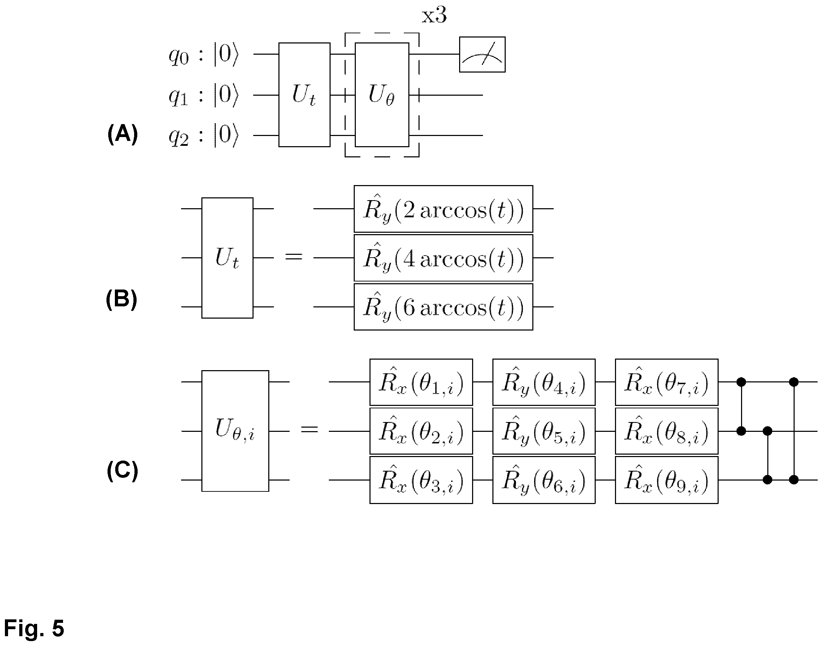

**Fig. 5** is a quantum circuit diagram of the quantum circuit that is used for the shots experiments shown in **Figs. 6-10**. The top diagram **(A)** shows a circuit diagram with three qubits $q_0$, $q_1$, $q_2$. The qubits are initialised with a zero basis state. A data encoding unitary $\hat{U}_t$ is applied to the qubits that applies a Chebyshev-tower type feature map, applying a rotation $R_Y(2(n + 1)\arccos t)$ to qubit number $n$ (shown in more detail on the middle row **(B)**). Subsequently, a variational Ansatz $\hat{U}_\theta$ is applied, comprising three parametrised variational unitaries $\hat{U}_{\theta, i}$, followed by a triangular ring of entangling CNOT gates implementing the hardware-efficient ansatz (HEA). This is shown in more detail in the bottom diagram **(C).** The circuit concludes with a measurement.

This experimental setup is chosen to ensure a degree of achievability on current quantum hardware. The three-qubit circuit can be represented by $\langle \emptyset | \hat{U}_t^\dagger \, \hat{U}_\theta^\dagger \, \hat{\mathcal{H}} \, \hat{U}_\theta \, \hat{U}_t | \emptyset \rangle$,

where $\hat{U}_t$ encodes data via a Chebyshev-tower type feature map, and $\hat{U}_\theta$ represents the parametrised variational unitary comprising single-qubit rotations followed by a triangular ring of entangling CNOT gates as in a hardware-efficient Ansatz. Input features $t$ were scaled linearly to [-0.95, 0.95] prior to the Chebyshev-feature encoding.

Variational parameters $\theta$ were initialised to be uniformly distributed in the range $[0, 2\pi]$. The Hamiltonian $\widehat{\mathcal{H}}$ is a single-qubit magnetization on the zeroth qubit.

PennyLane and Nevergrad are used in all quantum simulation experiments.

**Figs. 6-10** show results related to models of population extinction, population growth in a seasonal environment, and population evolution in an environment with limited resources, given respectively by equations:

$$\frac{dy}{dt} = -\frac{3}{2}y, \quad \frac{dy}{dt} = 3\cos(3t)\,y, \quad \frac{dy}{dt} = y\,(1-y) \qquad (45)$$

starting at time $t = 0$ with maximum times of $t = 2.0$, $t = 1.0$, $t = 5.0$ respectively, and with initial conditions $y = 1.5$, $y = 1.0$, and $y = 0.1$ respectively.

**Fig. 6A-F** are graphs showing experimental results comparing a method according to an embodiment to a prior art method. In these experiments, a finite number of shots was used. The black lines **602,612,622,632,642,652** represent mean losses according to a prior art method qPINN, which has been described above with reference to **Fig. 1**. The grey lines **604,614,624,634,644,654** represent mean losses according to a method according to an embodiment (denoted as *propagated* in the legend). The shaded regions around the qPINN lines represent the 95% confidence intervals of the mean calculated via bootstrapping over neural networks trained over 20 random seeds. For the *propagated* lines, these confidence intervals are covered by the line representing the mean.

The figures demonstrate a lower root mean squared error (RMSE) in terms of both the number of training epochs (**Fig. 6A-C**) and training shots (**Fig. 6D-F**). Both models were trained using the Adam optimiser with learning rate 0.01. **Fig. 6A,D** present the results for the seasonal growth of a population, depending on its environment, **Fig. 6B,E** show the logistic growth model, and **Fig. 6C,F** illustrate the population extinction model.

The number of collocation points and the number of repeated measurements for given circuit parameters were both set to 32 for the finite shot experiments, with collocation points arranged in a uniform grid. Numerical integration for propagated losses was done via a quasi Monte-Carlo method across collocation points. Training is done over 10k epochs per method. While finite shots are used during training, solution quality was calculated on the basis of expectations taken on a uniform grid of 128 points over the temporal domain. All results are over 20 different random seeds. Physics-informed solutions are compared for each system as given in equation (38), denoted as *qPINN,* to the propagated optimisation regime outlined in equation (44), denoted as *propagated.*

The experimental setup dictates a number of shots per training epoch dependent on the optimisation procedure used, which is summarised in Table 3. **Table 3:** Number of shots of a quantum circuit required per training epoch for our proposed propagated methodology compared to existing qPINN methods. Note that the approximate factor of 6 appearing between the two methods corresponds to requiring two extra circuit evaluations required for each of three data-encodings in our quantum circuits. For $N$ data-encodings, the propagated method gives an $\mathcal{O}(N)$ factor reduction in the number of shots required per training epoch.

| Method | Gradient-based | Gradient-free |
|---|---|---|
| Propagated | 56,320 | 1,024 |
| qPINN | 394,240 | 7,168 |

In **Fig. 6A-6F,** Adam is used as a gradient-based optimiser, with a learning rate of 0.01.

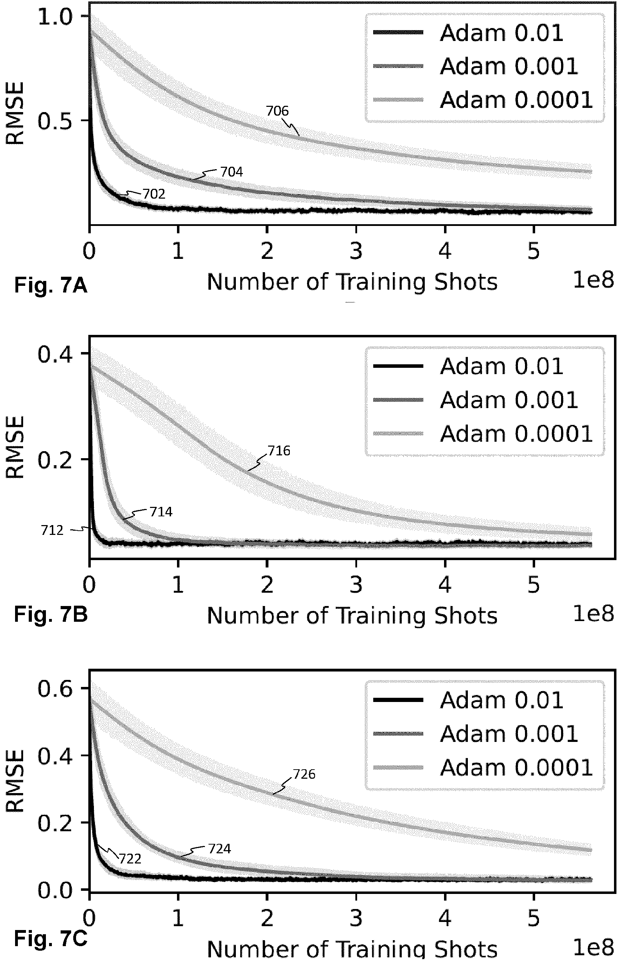

The results in **Fig. 7-9** are obtained using a methods according to the embodiment described for **Fig. 6A-F,** and again, **Fig. 7A,8A,9A** present results for the seasonal growth of a population, depending on its environment, **Fig. 7B,8B,9B** show the logistic growth model, and **Fig. 7C,8C,9C** illustrates the population extinction model.

**Fig. 7A-7C** compare these results with the same gradient-based optimiser Adam with different learning rates. Curves **702, 712,** and **722** show results with a learning rate of 0.01, curves **704, 714,** and **724** show results with a learning rate of 0.001, and curves **706, 716,** and **726** show results with a learning rate of 0.0001. In general, a higher learning rate leads to faster convergence.

Since automatic differentiation over trainable parameters in quantum neural networks carries a computational overhead scaling linearly with the number of parameters, as opposed the constant scaling of backpropagation with classical neural networks, there is a stronger incentive to use gradient-free methods to train quantum neural networks. Thus, gradient-based methods (with several learning rates) are compared with gradient-free methods.

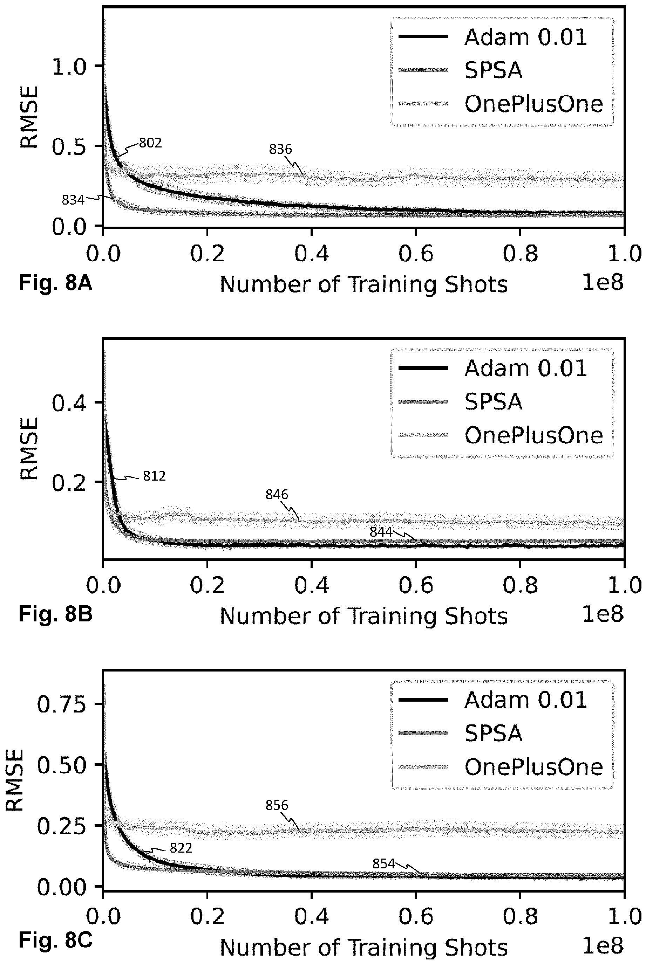

Fig. 8A-8C compare these results with so-called gradient-free optimisers. For gradient-free optimisation, Simultaneous Perturbation Stochastic Approximation (SPSA) is used, with hyperparameters standard deviation $c =$

0.15, and *a* = 2.0 needed for the calculation of the magnitude of the gradient. Additionally, the One-Plus-One optimiser with budget = 100, otherwise all remaining hyperparameters as set by Nevergrad. Curves **802, 812,** and **822** show again results with the Adam optimiser with a learning rate of 0.01, curves **834, 844,** and **854** show results using the SPSA optimiser, and curves **836, 846,** and **856** show results with the One-Plus-One optimiser.

Investigations into the optimisation of quantum neural networks in finite shot training is still in its nascent stages. **Fig. 9A-C** show results for essentially the same experiments as **Fig. 6A-C,** respectively, but in the infinite-shot limit rather than with a (more realistic) finite number of shuts. Mean qPINN losses **902,912,922** (black) vs propagated ('global') losses **904,914,924** (gray) with the shaded regions representing 95% confidence intervals of the mean calculated via bootstrapping over neural networks trained over 20 random seeds, demonstrating lower root mean squared error (RMSE) in terms of number of training epochs in the infinite shots case. Both models were trained using the Adam optimiser with learning rate 0.01.

As shown in **Figs. 6-10,** across a full range of gradient-based optimiser settings and gradient-free optimiser settings, faster convergence is obtained both in terms of shot number (where applicable) and in number of epochs. Additionally, lower end RMSEs are obtained in the finite-shot experiments and in most of the infinite-shot experiments.

Given the prevalence of infinite shot experiments, it is interesting to consider whether the performance of various algorithms in the limit of infinite shots translates to their performance with finite shots.

**Fig. 10** shows a comparison in the values final of log root mean squared error (RMSE) achieved after 10000 training epochs between the finite **1002,1004,1012,1014, 1022,1024** (left) and infinite shots **1006,1008,1016,1018,1026,1028** (right) cases for the propagated **1004,1008,1014,1018,1024,1028** (light grey) and qPINN **1002,1006,1012,1016, 1022,1026** (dark grey) methods using the Adam optimiser with a 0.01 learning rate. The boxplots show the loss distribution for the 20 random seed experiments. **Fig. 10A** shows the population extinction model, **Fig. 10B** the logistic growth model, and **Fig. 10C** the seasonal growth of a population, depending on its environment. Note in particular that for the seasonal model the qPINN shows preferable RMSE to propagated loss functions in the infinite shot limit, but worse RMSE in the finite shot limit.

Thus, in some cases, algorithm performance in the infinite shot limit is not indicative of algorithm performance in the finite shot limit. The implication of this result is two-fold:

1. it illustrates that infinite shot behaviour of quantum neural networks is not necessarily illustrative of finite shot behaviour; and

2. the currently presented propagated loss formulation has a favourable performance in the (physically feasible) finite shot regime.

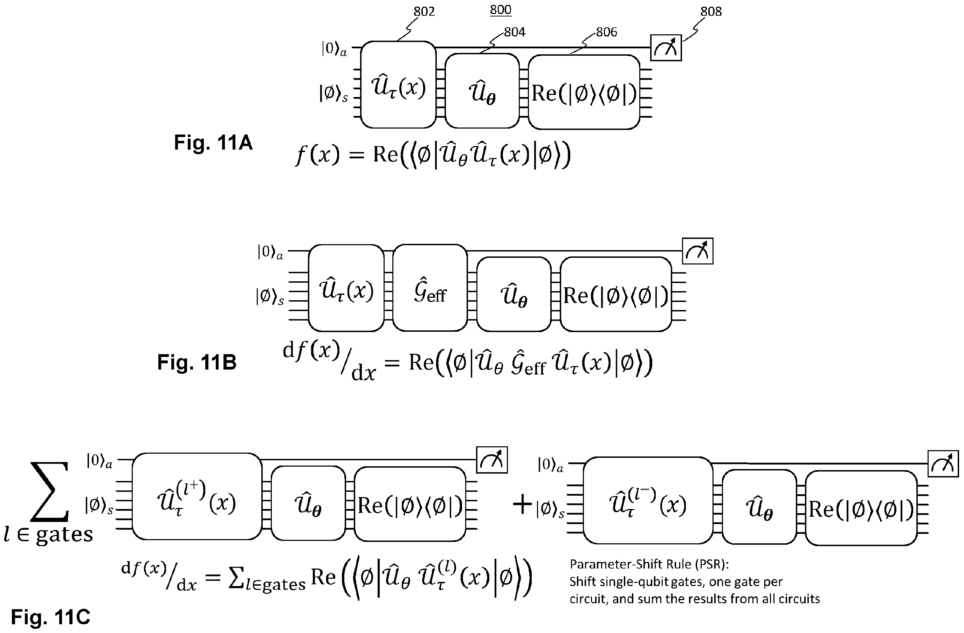

**Fig. 11A** shows a reference quantum machine learning model (a quantum neural network, QNN-type model). The circuit **1100** comprises, e.g., a Chebyshev feature map $\hat{\mathcal{U}}_\tau(x)$ **1102** or a Fourier feature map, a variational circuit $\hat{\mathcal{U}}_\theta$ **1104** parametrized by a parameter $\theta$ and a cost function Re(|∅⟩⟨∅|) **1106,** corresponding to projection on the zero state. A measurement **1108** on the ancilla may be included to select the appropriate sum term, which may be required for some feature maps such as the Chebyshev feature map.

One option to differentiate the circuit with respect to the input value *x* is to use the parameter shift rule, which is well-known in the art, illustrated in **Fig. 11C.** This approach is, for example, valid in the training stage when the cost function corresponds to, for example, a projection on the zero state (including ancilla qubit). Application of the parameter shift rule comprises executing the circuit twice for each gate that is dependent on the variable with respect to which the circuit is being differentiated, once with the *x*-dependent rotation angle shifted by +$\pi$/2 and once with the *x*-dependent rotation angle shifted by -$\pi$/2, and summing the results. There may be several *x*-dependent gates applied to each qubit; for example, the Chebyshev feature map uses two *x*-dependent gates applied to each qubit, so that the total number of parameter shifts (and hence terms in the final sum) is 4*n*, with *n* the number of encoding qubits. In the notation used in the figure, $\hat{\mathcal{U}}_\tau^{(l+)}(x)$ means that the rotation gate angle of gate *l* is shifted with $\pi$/2, and analogously *l* refers to a gate angle shift with -$\pi$/2). So, for example, the gate

$$\tilde{P}_{2^j}^s(x) = P_{2^j}(s \arccos x) = \mathrm{diag}\left[1, \exp\left(i\, s \frac{N}{2^j} \arccos(x)\right)\right] \tag{46}$$

is shifted to

$$\text{diag}\left[1, \exp\left(\text{i}\left(s\frac{N}{2^j}\arccos(x) + \frac{\pi}{2}\right)\right)\right] \tag{47}$$

(and analogously for $-\pi/2$), one gate at a time (in the current example, essentially, once for each pair $(j, s) \in \{0, \ldots, n-1\} \times \{1, -2\}$). This results in $4n$ modified circuits, which are summed to obtain the derivative circuit. Other examples may use even more circuits.

In cases where mid-circuit measurements are possible, an alternative differentiation method may be applied. In this case, the controlled phase rotations can be decomposed using CNOT conjugation, and two shifts per individually reuploaded parameter $x$ can be applied. This is repeated twice for different bases of the measurement outcomes. Thus, in total, the Chebyshev feature map can be differentiated with $4n$ parameter shifts.

The above approaches are described in more detail in Kyriienko et al., 'Generalized quantum circuit differentiation rules', Phys. Rev. A 104 (052417) -which is hereby incorporated by reference—, in particular in sections II.B and II.C.

Another option, illustrated in **Fig. 11B,** is to differentiate the feature map formally, extracting an effective generator $\hat{\mathcal{G}}_{\text{eff}}$, and taking derivatives as a linear combination of unitaries. For this, the (not necessarily normalised) state $|\tau(x)\rangle$ from eq. (11) is considered, where all the amplitudes are scaled Chebyshev polynomials. The normalised version of this is prepared by the Chebyshev feature map. When taking the derivative with respect to $x$ of a model containing $|\tau(x)\rangle$, the resulting model will contain $|\tau'(x)\rangle$ terms. This can be considered a state with each amplitude as scaled Chebyshev polynomial derivatives.

The Chebyshev polynomials and their derivatives are related by:

$$T_k'(x) = k\, U_{k-1}(x) \tag{48}$$

where $U_k(x)$ denotes a Chebyshev polynomial of the second kind of order $k$. This can then be further expanded to:

$$T_0'(x) = 0 \tag{49}$$

$$T_{2k}'(x) = 4k \sum_{m=1}^{k} T_{2m-1}(x) \tag{50}$$

$$T_{2k+1}'(x) = (4k + 2) \sum_{m=1}^{k} T_{2m}(x) + (2k + 1)\, T_0(x) \tag{51}$$

This means the derivative of a Chebyshev polynomial is a linear combination of lower order Chebyshev polynomials. Therefore, an effective operator $\hat{\mathcal{G}}_{\text{eff}}$ can be extracted such that:

$$|\tau'(x)\rangle = \hat{\mathcal{G}}_{\text{eff}}|\tau(x)\rangle. \tag{52}$$

The operator $\hat{\mathcal{G}}_{\text{eff}}$ is non-unitary, but can be implemented using known techniques to implement non-unitary operators, such as a linear combination of unitaries or embedding in a higher-order space.

For example, for a DQGM model, the following approach may be used. If a probability density function $p_\theta(x)$ is given by:

$$p_\theta(x) = |\langle\tau(x)|\psi_\theta\rangle|^2 = \mathcal{N}(x)\,\mathcal{N}^\dagger(x)\,|\langle\tilde{\tau}(x)|\psi_\theta\rangle|^2, \tag{53}$$

where $|\tilde{\tau}(x)\rangle$ is $|\tau(x)\rangle$ normalised and $\mathcal{N}(x)$ is the norm of $|\tau(x)\rangle$, then the derivative (using the product rule) is:

$$\begin{aligned}
p_\theta(x) &= \langle\tau'(x)|\psi_\theta\rangle\langle\psi_\theta|\tau(x)\rangle + \langle\tau(x)|\psi_\theta\rangle\langle\psi_\theta|\tau'(x)\rangle \\
&= \langle\tau(x)|\hat{\mathcal{G}}_{\text{eff}}^\dagger|\psi_\theta\rangle\langle\psi_\theta|\tau(x)\rangle + \langle\tau(x)|\psi_\theta\rangle\langle\psi_\theta|\hat{\mathcal{G}}_{\text{eff}}|\tau(x)\rangle \\
&= \mathcal{N}(x)\,\mathcal{N}^\dagger(x)\left(\langle\tilde{\tau}(x)|\hat{\mathcal{G}}_{\text{eff}}^\dagger|\psi_\theta\rangle\langle\psi_\theta|\tilde{\tau}(x)\rangle + \langle\tilde{\tau}(x)|\psi_\theta\rangle\langle\psi_\theta|\hat{\mathcal{G}}_{\text{eff}}|\tilde{\tau}(x)\rangle\right)
\end{aligned} \tag{54}$$

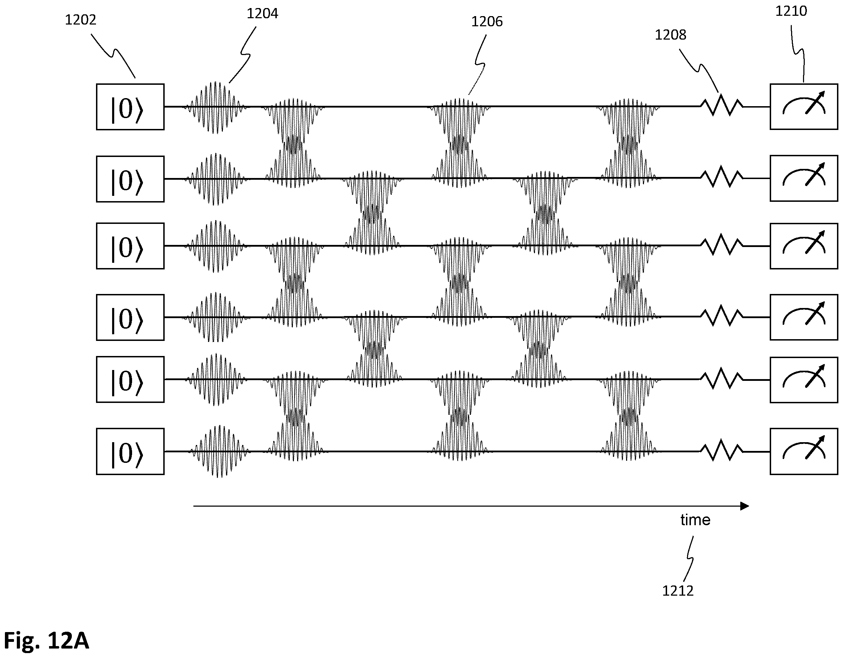

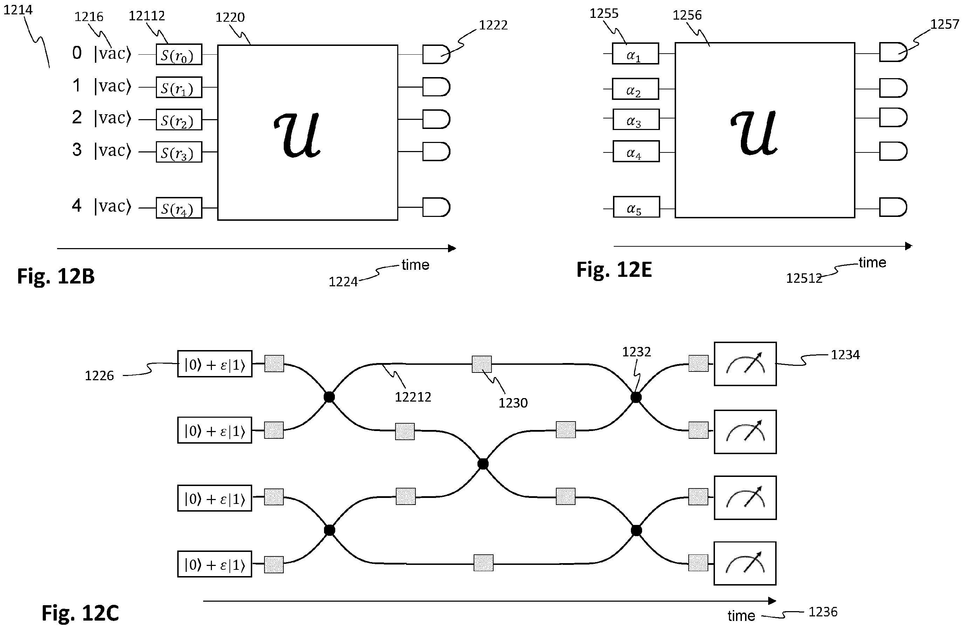

**Fig. 12A** is a hardware-level schematic of the actions effectuating the logical operations shown in circuit diagrams such as **Figs. 1** and **5.** Unitary operators, e.g. those to encode the quantum kernel feature map and derivatives thereof, can be decomposed into a sequence of logical gate operations. These logical gate operations are transformations in a quantum Hilbert space over the qubits encoding an input parameter. In order to transform the internal states of these qubits, a classical control stack is used to send pulse information to a pulse controller that affects one or more qubits. The controller may send a sequence of such pulses in time and for each qubit independently. An initialization pulse is used to initialize the qubits into the $|0\rangle$ state **1202.** Then, for example a series of single-qubit pulses is sent to the qubit array in **1204,** which may apply a single-layer feature map. Additionally, two-qubit pulse sequences can be used to effectively entangle multiple qubits with a feature map **1206.** The duration, type, strength and shape of these pulses determine the effectuated quantum logical operations. **1208** indicates a 'break' in the depicted timeline, which means the sequence of gates may be repeated in a similar fashion in the direction of the time axis **1212.** At the end of the pulse sequences, one or more of the qubits are measured **1210.**

**Fig. 12B** is a hardware-level schematic of the actions effectuating the logical operations shown in circuit diagrams such as **Figs. 1** and **5,** specified for a photonic/optical quantum processor. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send pulse information to a pulse controller that affects one or more modes. The controller may formulate the programmable unitary transformations in a parametrised way.

Initially the modes **1214** are all in the vacuum state **1216,** which are then squeezed to produce single-mode squeezed vacuum states **1218.** The duration, type, strength and shape of controlled-optical gate transformations determine the effectuated quantum logical operations **1220.** At the end of the optical paths, one or more modes are measured with photon-number resolving, Fock basis measurement **1222,** tomography or threshold detectors.

**Fig. 12C** is a hardware-level schematic of the actions effectuating the logical operations shown in circuit diagrams such as **Figs. 1** and **5,** specified for a Gaussian boson sampling device. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send information to optical switches and delay lines. The controller may formulate the programmable unitary transformations in a parametrised way.

Initially the modes **1226** are all in a weak coherent state, which is mostly a vacuum state with a chance of one or two photons and negligibly so for higher counts. Subsequently, the photons travel through optical waveguides **1228** through delay lines **1230** and two-mode couplers **1232** which can be tuned with a classical control stack, and which determines the effectuated quantum logical operations.

At the end of the optical paths, one or more modes are measured with photon-number resolving **1234,** or threshold detectors.

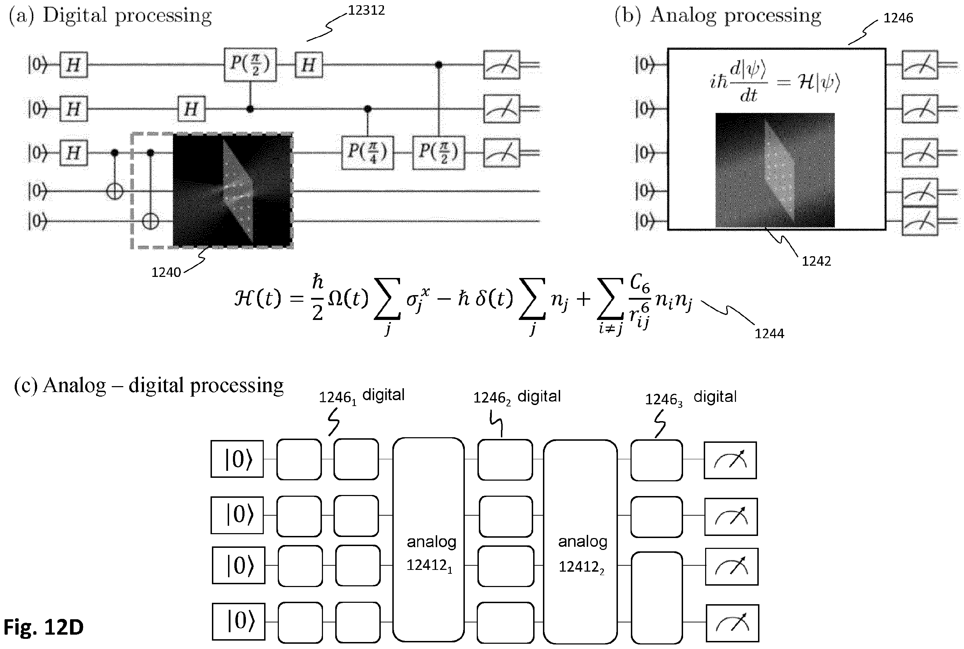

**Fig. 12D** is a hardware-level schematic of the actions effectuating the logical operations shown in circuit diagrams such as **Figs. 1** and **5,** which may be executed on a neutral-atom-based quantum computer. On this type of hardware, unitary operators, e.g. those used to encode the quantum feature map and derivatives thereof, can be decomposed in two different kinds of operations: digital or analog. Both of these operations are transformations in the quantum Hilbert space over atomic states.

Schematic (a) of **Fig. 12D** depicts a digital quantum circuit **1238,** wherein local laser pulses may be used to individually address neutral atoms to effectuate transitions between atomic states which effectively implement sets of standardized or 'digital' rotations on computational states. These digital gates may include any single-qubit rotations, and a controlled-pauli-Z operation with arbitrary number of control qubits. Additionally, such digital gate operations may also include 2-qubit operations.

Schematic (b) of **Fig. 12D** depicts an analog mode **1246** of operation, wherein a global laser light pulse may be applied to groups of, or all, atoms at the same time, with certain properties like detuning, Rabi frequencies and Rydberg interactions to cause multi-qubit entanglement thereby effectively driving the evolution of a Hamiltonian **1244** of the atomic array in an analog way. The combined quantum wavefunction evolves according to Schrödinger's equation, and particular,

unitary operators $\widehat{\mathcal{U}} = \mathrm{e}^{-\mathrm{i}\,\widehat{\mathcal{H}}\,t}$, where $\widehat{\mathcal{H}}$ denotes the Hamiltonian and $t$ the time, can be designed by pulse-shaping the parametrised coefficients of the Hamiltonian in time. This way, a parametric analog unitary block can be applied, which entangles the atoms and can act as a variational ansatz, or a feature map, or other entanglement operation.

The digital and analog modes can be combined or alternated, to yield a combination of the effects of each. Schematic (c) of **Fig. 12D** depicts an example of such digital-analog quantum circuit, including blocks **1246$_{1-3}$** of digital qubit operations (single or multi-qubit) and analog blocks **1248$_{1-3}$**.

It can been proven that any computation can be decomposed into a finite set of digital gates, including always at least one multi-qubit digital gate (universality of digital gate sets). This includes being able to simulate general analog Hamiltonian evolutions, by using Trotterization or other simulation methods. However, the cost of Trotterization is expensive, and decomposing multi-qubit Hamiltonian evolution into digital gates is costly in terms of number of operations needed.

Digital-analog circuits define circuits which are decomposed into both explicitly-digital and explicitly-analog operations. While under the hood, both are implemented as evolutions over controlled system Hamiltonians, the digital ones form a small set of pre-compiled operations, typically but not exclusively on single-qubits, while analog ones are used to evolve the system over its natural Hamiltonian, for example in order to achieve complex entangling dynamics.

It can be shown that complex multi-qubit analog operations can be reproduced/simulated only with a relatively large number of digital gates, thus posing an advantage for devices that achieve good control of both digital and analog operations, such as neutral atom quantum computer. Entanglement can spread more quickly in terms of wall-clock runtime of a single analog block compared to a sequence of digital gates, especially when considering also the finite connectivity of purely digital devices.

Further, digital-analog quantum circuits for a neutral quantum processor that are based on Rydberg type of Hamiltonians can be differentiated analytically so that they can be used in variational and/or quantum machine learning schemes, including the differential quantum circuit (DQC) schemes as described in this application.

In order to transform the internal states of these modes, a classical control stack is used to send information to optical components and lasers. The controller may formulate the programmable unitary transformations in a parametrised way.

At the end of the unitary transformations, the states of one or more atoms may be read out by applying measurement laser pulses, and then observing the brightness using a camera to spot which atomic qubit is turned 'on' or 'off', 1 or 0. This bit information across the array is then processed further according to the embodiments.

**Fig. 12E** is a hardware-level schematic of the actions effectuating the logical operations shown in **Figs. 1** and **5,** specified for a photonic/optical quantum processor. The quantum model can be decomposed into a sequence of optical gate operations. These optical gate operations are transformations in the quantum Hilbert space of the photons. In order to transform the internal states of these photons, a classical control stack is used to send information to a universal multiport interferometer. The controller may formulate the programmable unitary transformations in a parameterized way.

Initially the photons **1255** are in Fock states, weak coherent states or coherent states. The duration, type, strength and shape of controlled-optical gate transformations determine the effectuated quantum logical operations **1256.**

At the end of the optical paths, the modes are measured with photon-number resolving, Fock basis measurement **1257,** tomography or threshold detectors.

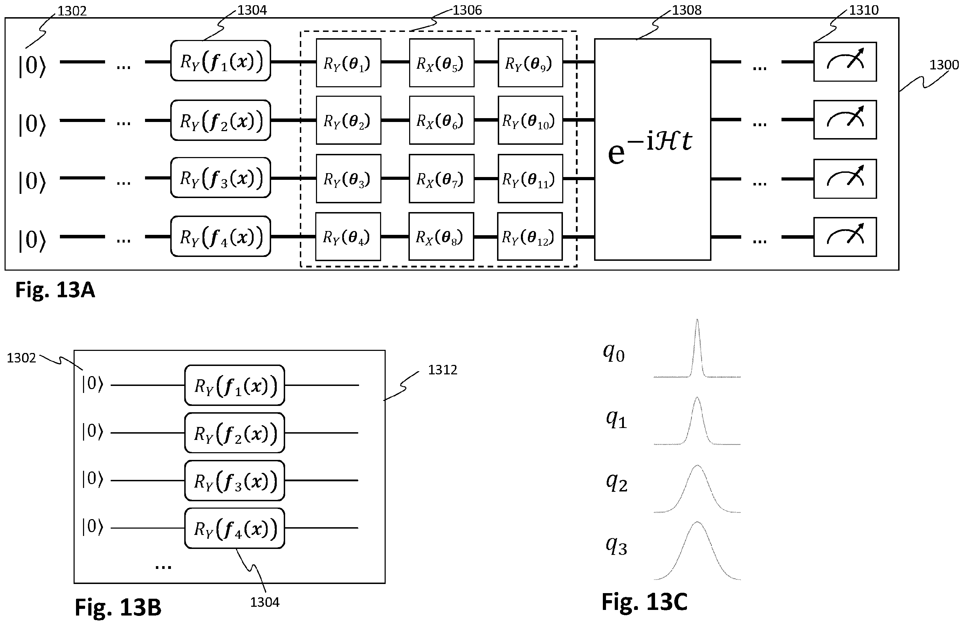

The hardware implementation shown in **Fig. 12A-12E** may also be used to implement the quantum circuits shown in **Fig. 13-16,** as applicable.

**Fig. 13A** depicts a system describing a Digital-Analog implementation of a quantum algorithm. In particular, **Fig. 13A** represents a Digital-Analog implementation where the qubit interactions can be switched on and off and there exists single-qubit addressability for the application of single-qubit gates, a process described in **1300.** In order to transform the internal states of these qubits, a classical control stack may be used to send information to a controller that affects one or more qubits. The controller may send multiple information carriers (e.g., pulses) in time and for each qubit independently. An initialization protocol is used to initialize the qubits, in this example into the $|0\rangle$ state **1302.** The current example shows only four qubits, but the same principles may be extended in a straightforward manner to systems with more (or less) than four qubits.

Then, a quantum feature map is applied **1304** to encode quantum information, e.g., an input variable, into a Hilbert space associated with the quantum processor.

Following application of the feature map, a variational Ansatz is applied, implemented as a variational quantum circuit **1306.** In the current example, the variational Ansatz comprises three single-qubit gates $R_Y$ - $R_X$ - $R_Y$ with different rotational angles $\theta_i$. These single-qubit gates are typically sets of standardized or 'digital' rotations on computational states applied to different qubits with different rotation angles/parameters. These digital gates include any single-qubit rotations according to the $\theta_i$ argument of the rotation. A single rotation/single-qubit gate is not sufficient to perform arbitrary rotation regardless of the parameter/angle since it can only rotate over a single axis. In order to accomplish a general rotation block, three gates in series with different rotation angles/parameters can be used, in this example represented by a block of single-qubit gates **1306.**

Then, the entanglement in this Digital-Analog approach is generated by a wavefunction evolution **1308,** described by the block $e^{-i\mathcal{H}t}$. During this evolution, the qubits are interacting amongst themselves, letting the system evolve for a specified amount of time. This process produces the necessary entanglement in the system. The combined quantum wavefunction evolves according to Schrödinger's equation, and particular unitary operators

$$\hat{\mathcal{U}} = e^{-i\mathcal{H}t}$$

in which $\mathcal{H}$ is the Hamiltonian of the system (for example, for neutral atoms the Hamiltonian that governs the system is

$$\mathcal{H} = \sum_{j \neq k} \left( \frac{C_6}{r_{jk}^6} \right) * \hat{n}_j * \hat{n}_k$$

with $\hat{n}$ being the state occupancy of the Rydberg atoms), and $t$ is the evolution time. In this way, a parametric analog unitary block can be applied, which entangles the atoms and can act as a variational Ansatz.

After the evolution of the wavefunction **1308,** another set of single-qubit gates may be applied, similar to the process described in the block of gates $R_Y$ - $R_X$ - $R_Y$ **1306.**

Then, the wavefunction may be evolved once more, and finally a measurement in the computational basis occurs as described in **1310.**

Optionally, additional steps may be included, represented by the ellipses, e.g., before, after, or in between the blocks shown. For example, a different initial state than 10) may be prepared prior to application of the feature map. Furthermore, the blocks can be executed in a different order, for instance, in some embodiments, block **1308** might precede block **1306.** One or more of the blocks **1304-1308,** or variations thereof, may be repeated one or more times prior to the measurement **1310.**

**Fig. 13B** represents a typical quantum feature map **1312** that starts by preparing the quantum register to the 10) quantum state **1302** and then applying single-qubit rotations in all of the qubits with (typically) different rotation angles **1304.** In this example, single qubit rotations **1304** (here chosen as $R_Y(f_i(\boldsymbol{x}))$) act on each qubit individually and are parametrized by a variable $\boldsymbol{x}$. For a non-linear feature map encoding such as the Chebyshev feature map, the variable $\boldsymbol{x}$ may be used as an angle of rotation.

The application **1304** of one rotation operation to each qubit in a register may be referred to as a single layer of rotation operations. This type of encoding of classical information into quantum states is known as angle encoding, which means that a data vector is represented by the angles of a quantum state. Angle encoding can be found in many Quantum Machine Learning algorithms, with the main advantage being that it only requires $n = \log NM$ qubits to encode a dataset of $M$ inputs with $N$ features each. Thus, considering an algorithm that is polynomial in $n$, it has a logarithmic runtime dependency on the data size.

**Fig. 13C** illustrates different pulses (potentially differing in pulse duration and/or amplitude/height) that can be sent to the quantum circuit (different qubits) to encode the classical information. The angle of the rotation that is described by the $f_i(x)$ dictates the duration and geometry of the pulse.

**Fig. 14A** presents a quantum circuit based on a Digital-Analog implementation **1400** that has no single-qubit addressability and uses a wavefunction evolution that can be turned on and off for the entanglement generation. **Fig. 14A** differs from **Fig. 13A** in that it shows a technique known as data re-uploading that alters the quantum feature map **1404** and **1410.** Loading classical data into a quantum system is a non-trivial task, and uploading large amounts of data makes it an even more critical issue. However, when the case of big-data is not considered, techniques like data re-uploading can be utilized. As the name suggests, this entails uploading the classical data multiple times, and encode them via rotational angle/parameter encoding into single-qubit rotations throughout the quantum circuit. Such a data re-uploading technique may start by setting the quantum register to an initial state, e.g., the all-zero state **1402,** followed by angle encoding that is based on a feature map **1404,** in this case a tower feature map.

Following that, as already explained above with reference to **1306,** three single-qubit gates in series are used to perform a general rotation block that acts as the Ansatz **1406.** In this example the encoding is done through the $\theta_i$ variable of the $R_Y$ - $R_X$ - $R_Y$ rotations; however, any type of combined rotations of the type ($R_X$, $R_Y$, $R_Z$) could be applied here. Since there is no single-qubit addressability in this example, each $R_Y$ and $R_X$ gate is applied at all qubits simultaneously with the same rotation angle $\theta_i$. Subsequently, the wavefunction is allowed to evolve for a specified amount of time **1408.**

Then the classical data are re-uploaded through angle encoding into single-qubit rotations **1410.** However, each time the (same) data are uploaded, the information is encoded using different angles than in the previous data uploading steps. For example, the amount of rotation may be doubled in each data (re-)uploading step **1404,1410** (i.e., the rotational angle of the might be increasing as 1-2-4, etc.).

Once again, the rotations $R_Y$ - $R_X$ - $R_Y$ are applied to all qubits simultaneously with the same rotation angle for each single qubit gate, but different than **1406.** The classical information can be repeatedly encoded into the quantum feature map through the data re-uploading technique, while changing the angle of the single qubit rotational angle (**1404, 1410,** etc.) every time after the wavefunction evolution. The resulting quantum feature map can become more expressive as a tower feature map by doing this process of serial data re-uploading with different levels of rotational angles every time the re-uploading is done.

**Fig. 14B** illustrates a different (and at current technology levels more realistic) form of a Digital-Analog implementation. In this implementation, the system has single-qubit addressability, but the wavefunction evolution cannot be turned off, thus staying always on. This system requires less control over the qubit interactions (since they are always on) and only requires single-qubit addressability.

The single-qubit gates are applied while the wavefunction evolution (qubit interaction) is also happening. In the shown example, the quantum circuit **1418** starts by encoding information in the 10) quantum state **1402,** followed by a quantum feature map **1404** (analogous to **1304**).

Then, a variational Ansatz is applied, comprising both wavefunction evolution $e^{-i \mathcal{H} t}$ **1408** and simultaneous application of a block of single-qubit gates **1416** (similar to block **1306**). After multiple repetitions of block **1416,** each time with different rotational angles at the single-qubit gates, the circuit ends with a measurement in the computational basis **1414.**

**Fig. 15A** illustrates a quantum circuit **1500** that implements a Digital-Analog implementation with single-qubit addressability, wherein the wavefunction evolution (e.g., atom interactions) can be turned on and off. This quantum circuit is equivalent to the quantum circuit in **Fig. 14A,** with the time of the wavefunction evolution **1508** being $t = \pi$ (in dimensionless coordinates), while all other operations are the same as the ones described in **1400.** The same technique of data re-uploading with a tower feature map **1504, 1510** and the same Ansatz comprising single-qubit gates **1506,1512** followed by wavefunction evolution **1508** are used (all similar to **1400**).

The reason that such a specific time period for the wavefunction evolution **1508** is selected, is due to the fact that such evolution results in the application of Controlled-Z (CZ) gates between pairs of qubits. The benefit of describing the wavefunction evolution as a set of CZ gates lies in the fact that this Digital-Analog implementation of a quantum circuit resembles the structure of the equivalent Digital quantum circuit, which instead of the operation **1508** performs a set of CNOT gates between pairs of qubits included in the quantum circuit. This allows more straightforward comparisons to be drawn between the Digital and Analog implementation of such feature maps, and to evaluate their relative performance.

**Fig. 15B** illustrates a quantum circuit that implements a Digital-Analog implementation with single-qubit addressability **1518,** similar to **1500,** but with the entanglement generated via CZ gates between the qubits, resembling the atom interaction / entanglement generation.

**Fig. 16** presents a workflow for generalized circuit differentiation. In Quantum Machine Learning (QML) algorithms, various quantum feature maps and Parametric Quantum Circuits (PQCs) are typically utilised to express the circuit required to solve a particular problem. These quantum circuits contain tuneable parameters that use a classical optimizer to find the optimal values of the parameters that exist for that formulation. The differentiation required for most parameter optimization methods can be achieved in various ways, with the most common one being the Parameter Shift Rule (PSR). An example of such kind of differentiation for quantum feature maps is presented in **Fig. 11A-C**.

One way to calculate analytic derivatives of quantum circuits is by measuring overlaps between quantum states. Analytic derivatives can be used for differentiating unitaries like the one presented in **1604,** e.g., $\hat{u} = e^{-i x \hat{G}/2}$ generated by arbitrary Hermitian generator $\hat{G}$. However, in order to have a less resource-intensive method for differentiation, the parameter shift rule (PSR) was proposed. The PSR algorithm can provide analytic gradient estimations through measurement of the expectation values, with gate parameters being shifted to different values. The PSR algorithm is much used to perform differentiation for QML algorithms; however, it is only valid for a specific type of generators, viz., generators that are involutory or idempotent. This is because the full analytic derivative only requires 2 measurements of expectation values (2 unique eigenvalues). Although this simplifies the differentiation protocol, it also restricts it to only work for a certain type of generators.

Therefore, as an improvements and generalizations of the PSR algorithm, in **1600** a scheme for a Generalized Parametric Shift Rule (GPSR) algorithm is shown. Such approach allows for differentiating generic quantum circuits with unitaries generated by operators with a rich spectrum (i.e., not limited to idempotent generators). The GPSR algorithm is based on spectral decomposition, and showcases the role of the eigenvalue differences (spectral gaps) during differentiation for the generator spectrum. Such approach works for multiple non-degenerate gaps, in contrast to the PSR that is only valid for involutory and idempotent operators with a single unique spectral gap.

A workflow for generalized circuit differentiation can be described as follows: create a quantum circuit that encodes the function $f$ similar to **1600** including single- and multi-qubit gates **1602.** Pick a unitary operator such as

$$\hat{U}(x) = \exp\left(-i x \, \hat{G}/2\right)$$

**1604** that is parametrized by some tuneable parameter $x$, and study the spectrum of its generator $G$. Then, using unique and positive spectral gaps, a system of equations that includes the spectral information can be created, alongside the calculated parameter shifts, and the measured function expectation values as shifted parameters. The solution of such system can provide the analytical derivative for any general generator G and thus perform GPSR. GPSR is described in more detail in Kyriienko et al., 'Generalized quantum circuit differentiation rules', Phys. Rev. A 104 (052417), which is hereby incorporated by reference.

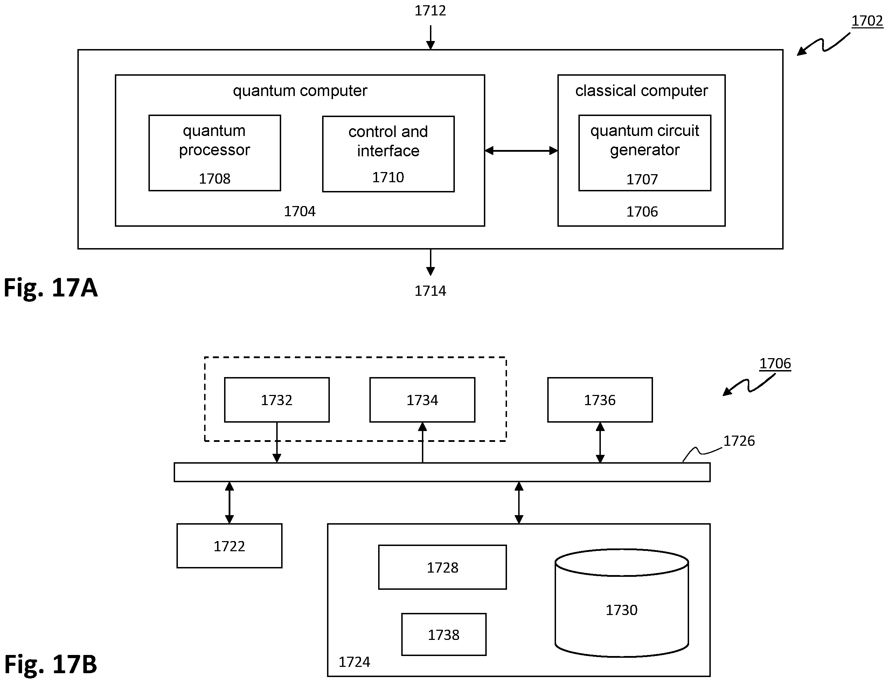

**Fig. 17A** depicts a system for determining a solution for an computational problem using a hybrid quantum computer system according to an embodiment. The system **1702** may include a quantum computer system **1704** comprising one or more quantum processors **1708,** e.g. a gate-based qubit quantum processor, and a controller system **1710** comprising input output (I/O) devices which form an interface between the quantum processor and the outside world, e.g., the one or more classical processors of a classical computer **1706.** For example, the controller system may include a system for generating control signals for controlling the quantum processing elements. The control signals may include for example a sequence of pulses, e.g. microwave pulses, voltage pulses and/or optical pulses, which are used to manipulate qubits. Further, the controller may include output device, e.g. readout circuits, for readout of the qubits and the control signals for readout of the quantum processing elements, e.g. a readout pulse for reading a qubit. In some embodiments, at least a part such readout circuit may be located or integrated with the chip that includes the qubits.

The system may further comprise a (purely classical information) input **1712** and an (purely classical information) output **1714.** The data processor systems may be configured to solve an optimization problem using the quantum computer. Input data may include information about the optimisation problem one wishes to solve. This information may include training data such as input-output pairs, a differential equation, boundary conditions, initial values, regularization values, etc. The input data may be used by the system to construct quantum circuits, in particular quantum feature maps and/or parametrized quantum circuits, and to classically calculate values, e.g. sequences of pulses, which may be used to initialize and control qubit operations according to the quantum circuit. To that end, the classical computer may include a quantum circuit generator **1707.** The input data may be used by the system to classically calculate values, e.g. parameter settings, which may be used to initialize the quantum circuit that is implemented on the quantum processor. Similarly, output data may include loss function values, sampling results, correlator operator expectation values, optimisation convergence results, optimized quantum circuit parameters and hyperparameters, and other classical data.

Each of the one or more quantum processors may comprise a set of controllable quantum processing elements, e.g. a set of controllable two-level systems referred to as qubits. The two levels are $|0\rangle$ and $|1\rangle$ and the wave function of a $N$-qubit quantum processor may be regarded as a complex-valued superposition of $2^N$ of these (distinct) basis states. The embodiments in this application however are not limited to qubits but may include any multi-level quantum processing elements, e.g. qutrits, that is suitable for performing quantum computation. Examples of such quantum processors include noisy intermediate-scale quantum (NISQ) computing devices and fault tolerant quantum computing (FTQC) devices.

The quantum processor may be configured to execute a quantum algorithm in accordance with the gate operations of a quantum circuit. The quantum processor may be implemented as a gate-based qubit quantum device, which allows initialization of the qubits into an initial state, interactions between the qubits by sequentially applying quantum gates between different qubits and subsequent measurement of the qubits' states. To that end, the input devices may be configured to configure the quantum processor in an initial state and to control gates that realize interactions between the qubits. Similarly, the output devices may include readout circuitry for readout of the qubits which may be used to determine a measure of the energy associated with the expectation value of the Hamiltonian of the system taken over the prepared state.

Furthermore, the one or more quantum processors may comprise a set of continuous variable systems, such as optical or photonic quantum computers. Furthermore, the quantum processor may comprise a Gaussian Boson Sampling device as described above with reference to **Fig. 12C** or any of the other hardware described above with reference to **Fig. 12A-E.**

In some embodiments, the first data processor system may be implemented as a software program for simulating a quantum computer system **1704** comprising a quantum processor system **1708.** Hence, in that case, the software program may be a classical software program that runs a classical computer **1706** so that quantum algorithms can be developed, executed and tested on a classical computer without requiring access to a hardware implementation of the quantum processor system.

**Fig. 17B** is a block diagram illustrating an exemplary classical data processing system described in this disclosure, for example classical computer **1706.** Classical data processing system **1720** may include at least one processor **1722** coupled to memory elements **1724** through a system bus **1726.** As such, the data processing system may store program code within memory elements **1724.** Further, processor **1722** may execute the program code accessed from memory elements **1724** via system bus **1726.** In one aspect, data processing system may be implemented as a computer that is suitable for storing and/or executing program code. It should be appreciated, however, that data processing system **1720** may be implemented in the form of any system including a processor and memory that is capable of performing the functions described within this specification.

Memory elements **1724** may include one or more physical memory devices such as, for example, local memory **1728** and one or more bulk storage devices **1730.** Local memory may refer to random access memory or other non-persistent memory device(s) generally used during actual execution of the program code. A bulk storage device may be implemented as a hard drive or other persistent data storage device. The classical data processing system **1720** may also include one or more cache memories (not shown) that provide temporary storage of at least some program code in order to reduce the number of times program code must be retrieved from bulk storage device **1730** during execution.

Input/output (I/O) devices depicted as key device **1732** and output device **1734** optionally can be coupled to the data processing system. Examples of key device may include, but are not limited to, for example, a keyboard, a pointing device such as a mouse, or the like. Examples of output device may include, but are not limited to, for example, a monitor or display, speakers, or the like. Key device and/or output device may be coupled to data processing system either directly or through intervening I/O controllers. A network adapter **1736** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Operation modems, cable operation modems, and Ethernet cards are examples of different types of network adapter that may be used with classical data processing system **1720.**

As pictured in **FIG. 17B,** memory elements **1724** may store an application **1738.** It should be appreciated that classical data processing system **1720** may further execute an operating system (not shown) that can facilitate execution of the application. Application, being implemented in the form of executable program code, can be executed by classical data processing system **1720,** e.g., by processor **1722.** Responsive to executing application, data processing system may be configured to perform one or more operations to be described herein in further detail.

In one aspect, for example, classical data processing system **1720** may represent a client data processing system. In that case, application **1738** may represent a client application that, when executed, configures classical data processing system **1720** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **1738,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The corresponding structures, materials, acts, and equivalents of all means or step plus function elements in the claims below are intended to include any structure, material, or act for performing the function in combination with other claimed elements as specifically claimed.

The description of the present embodiments has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1.    A method for solving a differential problem using a hybrid computer system comprising a classical computer system and a quantum processor, the differential problem defining a differential equation on a domain and a boundary condition on a boundary of the domain, the method comprising:

receiving or determining information on one or more quantum circuits defining operations of a parameterized quantum model of a trial function parametrized by variational parameters;
receiving or determining an integral formulation of the differential equation, the integral formulation defining an equation with a differential order that is smaller with respect to at least one independent variable of the differential equation than a differential order of the differential equation with respect to the at least one independent variable, the integral formulation incorporating at least part of the boundary condition, the integral formulation comprising a integral, preferably a path integral, with a first integration limit corresponding to a point on the boundary and a second integration limit corresponding to a point in the domain; and
determining a solution to the differential problem based on the parameterized quantum model and a loss function based on the integral formulation of the differential problem,
wherein evaluation of the loss function for the point in the domain comprises computation of the path integral, the computation of the path integral being based on one or more collocation points between the point on the boundary and the point in the domain, and
wherein the determination of the solution includes varying the variational parameters to determine a set of optimal parameters defining the solution of the differential equation, the varying of the variational parameters including:

- translating the operations of the one or more quantum circuits into control signals for control and readout of quantum elements of the quantum processor;
- applying the operations of the one or more quantum circuits to the quantum elements based on the control signals;
- determining classical measurement data by estimating one ore more expectation values based on a plurality of measurements on the quantum elements;
- computing a loss value based on the loss function and the classical measurement data; and
- adjusting the variational parameters based on the loss value.

2. The method as claimed in claim 1, wherein varying the variational parameters includes one or more of:

determining or estimating a gradient of the loss value with respect to the variational parameters and adjusting the variational parameters based on the determined or estimated gradient,
determining a population of initial sets of variational parameters with associated loss values and determining adjusted sets of variational parameters based on the initial sets of variational parameters and the associated loss values.

3. The method as claimed in claim 1 or 2, wherein computing the loss value comprises estimating the integral using at least one of: a regular Monte Carlo-based method, a quasi-Monte Carlo-based method, a quantum Monte Carlo-based method, a method based on midpoint rules, or a quadrature-based method.

4. The method as claimed in any one of the preceding claims, wherein the parametrized quantum model is one of:

a quantum neural network, the quantum neural network preferably comprising a feature map for encoding an independent variable and a variational circuit, wherein preferably a function value of the trial function is associated with an observable, e.g. an expectation value, of the one or more quantum circuits, or wherein the function value is associated with a functional of an output state of the one or more quantum circuits, e.g. an overlap with the zero state, a real component, or an imaginary component;
a quantum-kernel based model, preferable evaluation of the quantum kernel comprising determining an overlap between a first quantum state associated with a first input variable and a second quantum state associated with a second input variable, preferably the overlap being determined based a Hadamard test or a SWAP test; and/or
an amplitude-encoding based model, preferably the one or more quantum circuits defining operations for encoding primitive elements (e.g., terms such as $f(x)$, $f(x)/dx$, $g(x)$, etc.) of the differential equation in a plurality of quantum states of quantum elements of the quantum processor, each quantum state of the plurality of quantum states corresponding to a set of coefficients associated with the basis functions.

5. The method as claimed in any one of the preceding claims, wherein the differential equation is an ordinary differential equation, partial differential equation, a stochastic differential equation, a delay differential equation, and/or wherein the differential problem is an initial value problem.

6. The method as claimed in any one of the preceding claims, wherein the differential problem defining a further differential equation, the method further comprising solving the further differential equation using a further method for solving differential problems, preferably the further method being one based on differential quantum circuits, based on quantum kernels, or based on amplitude-encoding of a set of coefficients associated with basis functions representing a trial function.

7. The method as claimed in any one of the preceding claims,

wherein executing a quantum circuit by the quantum processor comprises translating the quantum circuit into a sequence of signals and using the sequence of signals to operate quantum elements in the quantum register of the quantum processor; and/or,
wherein receiving hardware measurement data comprises applying a read-out signal to quantum elements of the quantum processor and, in response to the read-out signal, measuring quantum hardware measurement data.

8. The method as claimed in any of the preceding claims, wherein the hybrid quantum computer includes a gate-based qubit device, a digital/analog quantum device, a neutral-atom-based quantum device, an optical qubit device and/or a gaussian boson sampling device.

9. A method for solving a differential problem, the differential problem defining a differential equation on a domain and a boundary condition on a boundary of the domain, the method comprising:

receiving or determining information on a parametrized model of a trial function parametrized by variational parameters;

receiving or determining an integral formulation of the differential equation, the integral formulation defining an equation with a differential order that is smaller with respect to at least one independent variable of the differential equation than a differential order of the differential equation with respect to the at least one independent variable, the integral formulation incorporating at least part of the boundary condition, the integral formulation comprising a path integral with a first integration limit corresponding to a point on the boundary and a second integration limit corresponding to a point in the domain; and

determining the solution to the differential problem based on the parameterized model and a loss function associated with the integral formulation of the differential problem,

wherein evaluation of the loss function for the point in the domain comprises computation of the integral, the computation of the integral being based on one or more collocation points between the point on the boundary and the point in the domain, and

wherein the determination of the solution includes training a neural network to determine a set of optimal variational parameters such that the trained neural network represents a solution of the differential equation.

10. The method as claimed in claim 9, wherein training the neural network comprises variationally optimising the variational parameters, the training including:

- evaluating the parametrized model of the trial function using first values for the variational parameters;
- computing a loss value based on the loss function and the evaluated parametrized model; and
- adjusting the variational parameters based on the loss value.

11. A system for solving a differential problem, the differential problem defining a differential equation on a domain and a boundary condition on a boundary of the domain, the system comprising a classical computer system and a special purpose processor, the system being configured for:

receiving or determining information on a parametrized model of a trial function parametrized by variational parameters;

receiving or determining an integral formulation of the differential equation, the integral formulation defining an equation with a differential order that is smaller with respect to at least one independent variable of the differential equation than a differential order of the differential equation with respect to the at least one independent variable, the integral formulation incorporating at least part of the boundary condition, the integral formulation comprising a path integral with a first integration limit corresponding to a point on the boundary and a second integration limit corresponding to a point in the domain; and

determining the solution to the differential problem based on the parameterized model and a loss function associated with the integral formulation of the differential problem,

wherein evaluation of the loss function for the point in the domain comprises computation of the integral, the computation of the integral being based on one or more collocation points between the point on the boundary and the point in the domain,

and wherein the determination of the solution includes training a neural network to determine a set of optimal variational parameters such that the trained neural network represents a solution of the differential equation.

12. The system as claimed in claim 11, wherein the special purpose processor is a quantum processor, and wherein varying of the variational parameters includes:

- translating the operations of the one or more quantum circuits into control signals for control and readout of quantum elements of the quantum processor;
- applying the operations of one or more the quantum circuit to the quantum elements based on the control signals;
- determining classical measurement data by estimating an expectation value based on a plurality of measurements on the quantum elements;
- computing a loss value based on the loss function and the classical measurement data; and
- adjusting the variational parameters based on the loss value.

13. The system as claimed in claim 11 or 12, further configured to execute any of the method steps as claimed in any one of claims 2-10.

14. A computer program product comprising software code portions configured for, when run in the memory of a computer, executing the method steps according to any one of claims 1-10.

15. A non-transitory computer-readable storage medium storing at least one software code portion, the software code portion, when executed or processed by a computer, is configured to perform the method as claimed in any one of claims 1-10.

**Fig. 1A**

**Fig. 1B**

$$\frac{\mathrm{d}}{\mathrm{d}x} f_{\boldsymbol{\theta}}(x) =$$

**Fig. 1C**

$$\boxed{202 \quad \text{differential problem:} \begin{cases} DE\big(x, f(x), f'(x)\big) = 0, \ x \in \Omega \\ BC\big(f(x_0), f'(x_0)\big) = 0, \ x_0 \in \partial\Omega \end{cases}}$$

$$\boxed{204 \quad \text{trial function: parametrized quantum model } q_\theta(x) \sim f(x)}$$

$$\boxed{206 \quad \begin{array}{c} \text{loss function} \\ \mathcal{L} = \mathcal{L}_{DE}\big(x, q_\theta(x), q'_\theta(x)\big) + \mathcal{L}_{BC}\big(q_\theta(x_0), q'_\theta(x_0)\big) \\ \text{Computing } \mathcal{L} \text{ requires evaluation of } q_\theta, q'_\theta \end{array}}$$

$$\boxed{208 \quad \begin{array}{c} \text{loss function} \\ \mathcal{L} = \left\Vert q_\theta(x) - \left(\left(I_{BC}(q_\theta(x_0)) + \int_{x_0}^{x} I_{DE}\big(y, q_\theta(y)\big)dy\right)\right)\right\Vert \\ \text{Computing } \mathcal{L} \text{ requires evaluation of } q_\theta \end{array}}$$

$$\boxed{210 \quad \text{determine optimal } q_\theta(x) \text{ by varying } \theta \text{ and minimizing } \mathcal{L}}$$

$$\boxed{\begin{array}{l} 212 \ \text{evaluate solution with quantum model at optimized parameters} \\ \quad q_{\theta_{\mathrm{opt}}}(x_i) \text{ at chosen coordinates } x_i \end{array}}$$

**Fig. 2**

$$\text{DE: } \frac{\partial y(t)}{\partial t} + F(y(t), t) = 0, \text{ BC: } y(0) = y_0$$

QPU: for each point $t_i$, compute: $q'_\theta(t_i), q_\theta(t_i)$

CPU: compute $\mathcal{L}_{DE} = \sum_i \left( q'_\theta(t_i) + F(q_\theta(t_i), t_i) \right)^2$
and $\mathcal{L}_{BC} = (q_\theta(0) - y_0)^2$

**Fig. 3A**

$$y(t) = y_0 - \int_0^t F(y(\tau), \tau)\, d\tau \approx y_0 - \sum_{j \le i} w_j\, F\big(y(t_j), t_j\big)$$

**Fig. 3B**

**Fig. 3C**

QPU: for each point $t_i$, compute: $q_\theta(t_i)$

CPU: compute $\mathcal{L} = \sum_i \Big(q_\theta(t_i) - \big(y_0 - \sum_{j \le i} F\big(q_\theta(t_j), t_j\big)\big)\Big)^2$

**Fig. 4A**

402
Input: differential problem

404
Formulate integral equation based on differential problem

406
Represent trial function as variational quantum circuit

408
Derive loss function from parameterized integral equation

410
Approximate integral in loss function, e.g., regular quasi or quantum Monte Carlo, midpoint rules, quadrature

412
Gradient-based optimization of circuit parameters.

414
Gradient-free optimization of circuit parameters, e.g., SPSA, Genetic Algorithms, Evolutionary Strategies

416
Evaluate solution with quantum model at optimized parameters at chosen coordinates

**Fig. 4B**

422
$$\frac{\mathrm{d}y(t)}{\mathrm{d}t} = t\, y(t), \quad y(0) = y_0$$

424
$$y(t) = y_0 + \int_0^t y(t')\, t'\, \mathrm{d}t'$$

426
$$q_\theta(t) = \langle\emptyset|\hat{U}_x^\dagger\hat{U}_\theta^\dagger\hat{\mathcal{H}}\hat{U}_\theta\hat{U}_x|\emptyset\rangle, \quad q_\theta(t) = y_0 + \int_0^t q_\theta(t')\, t'\mathrm{d}t'$$

428
$$\mathcal{L}(\theta) = \left(q_\theta(t) - y_0 - \int q_\theta(t')\, t'\, dt'\right)^2$$

430
$$\int_{t_0}^t q_\theta(t')t'dt' = \frac{(t-t_0)}{N}\sum_{i=0,1...N} t_i q_\theta(t_i), t_0 < t_1 < t_2 < \cdots < t_N$$

432
$$\frac{\partial\mathcal{L}}{\partial\theta_i} = \frac{1}{2}\left(q_{\theta_i+\pi/2} + q_{\theta_i-\pi/2}\right)$$
$$\nabla_\theta\mathcal{L} = \left(\frac{\partial\mathcal{L}}{\partial\theta_1}, \frac{\partial\mathcal{L}}{\partial\theta_2}, \cdots\right)$$
$$\theta \to \theta - \nabla_\theta\mathcal{L}$$

434
$$\hat{\theta} = \theta + \text{noise}$$
If $\mathcal{L}(\hat{\theta}) < \mathcal{L}(\theta)$ then $\theta \to \hat{\theta}$

436
For optimized parameters $\theta^*$ and coordinate $t_i$
$$y(t_i) \approx q_{\theta^*}(t_i)$$

EP 4 530 938 A1

x3

$q_0 : |0\rangle$

$q_1 : |0\rangle$

(A) $q_2 : |0\rangle$

$U_t$ $U_\theta$

(B) $U_t \;=\; \hat{R}_y(2\arccos(t))$ / $\hat{R}_y(4\arccos(t))$ / $\hat{R}_y(6\arccos(t))$

(C) $U_{\theta,i} \;=\; \hat{R}_x(\theta_{1,i})$ $\hat{R}_y(\theta_{4,i})$ $\hat{R}_x(\theta_{7,i})$ / $\hat{R}_x(\theta_{2,i})$ $\hat{R}_y(\theta_{5,i})$ $\hat{R}_x(\theta_{8,i})$ / $\hat{R}_x(\theta_{3,i})$ $\hat{R}_y(\theta_{6,i})$ $\hat{R}_x(\theta_{9,i})$

Fig. 5

Fig. 6A

Fig. 6B

Fig. 6C

Fig. 6D

Fig. 6E

Fig. 6F

Fig. 7A

Fig. 7B

Fig. 7C

Fig. 8A

Fig. 8B

Fig. 8C

Fig. 9A

Fig. 9B

Fig. 9C

**Fig. 10A**

**Fig. 10B**

**Fig. 10C**

$$e^{-i\,x\,\hat{G}/2}$$

$$f(x)$$

**Fig. 16**

Fig. 11A

$$f(x) = \mathrm{Re}(\langle\emptyset|\hat{\mathcal{U}}_\theta\,\hat{\mathcal{U}}_\tau(x)|\emptyset\rangle)$$

Fig. 11B

$$\mathrm{d}f(x)/_{\mathrm{d}x} = \mathrm{Re}(\langle\emptyset|\hat{\mathcal{U}}_\theta\,\hat{\mathcal{G}}_{\mathrm{eff}}\,\hat{\mathcal{U}}_\tau(x)|\emptyset\rangle)$$

Fig. 11C

$$\mathrm{d}f(x)/_{\mathrm{d}x} = \sum_{l\in\mathrm{gates}} \mathrm{Re}\left(\langle\emptyset|\hat{\mathcal{U}}_\theta\,\hat{\mathcal{U}}_\tau^{(l)}(x)|\emptyset\rangle\right)$$

Parameter-Shift Rule (PSR):
Shift single-qubit gates, one gate per circuit, and sum the results from all circuits

44

**Fig. 12A**

EP 4 530 938 A1

**Fig. 12B**

**Fig. 12E**

**Fig. 12C**

EP 4 530 938 A1

(a) Digital processing

12312

$H$  $P(\frac{\pi}{2})$  $H$

$H$

$P(\frac{\pi}{4})$

$P(\frac{\pi}{2})$

1240

(b) Analog processing

1246

$$i\hbar\frac{d|\psi\rangle}{dt} = \mathcal{H}|\psi\rangle$$

1242

1244

$$\mathcal{H}(t) = \frac{\hbar}{2}\Omega(t)\sum_j \sigma_j^x - \hbar\,\delta(t)\sum_j n_j + \sum_{i\neq j}\frac{C_6}{r_{ij}^6}n_i n_j$$

(c) Analog – digital processing

$1246_1$ digital    $1246_2$ digital    $1246_3$ digital

analog $12412_1$    analog $12412_2$

$|0\rangle$

Fig. 12D

**Fig. 13A**

**Fig. 13B**

**Fig. 13C**

EP 4 530 938 A1

Fig. 14A

Fig. 14B

**Fig. 15A**

1502  1504  1506  1508  1504  1506  1508  1502

1500

**Fig. 15B**  1502  1504  1506  1516  1504  1514

1518

EP 4 530 938 A1

**Fig. 17A**

**Fig. 17B**

EP 4 530 938 A1

Europäisches
Patentamt

European
Patent Office

Office européen
des brevets

# EUROPEAN SEARCH REPORT

**Application Number**

EP 23 20 1091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Abbas Amira ET AL: "On quantum backpropagation, information reuse, and cheating measurement collapse", arXiv.org, 22 May 2023 (2023-05-22), pages 1-29, XP093134653, Ithaca DOI: 10.48550/arxiv.2305.13362 Retrieved from the Internet: URL:https://arxiv.org/pdf/2305.13362.pdf [retrieved on 2024-02-26] * abstract * * page 1, line 1 – page 10, line 15 * * page 12, line 25 – page 29, line 5 * | 1-15 | INV. G06N10/60 G06N3/084 G06N10/20 ADD. G06N10/40 |
| A | Bowles Joseph ET AL: "Backpropagation scaling in parameterised quantum circuits", arXiv.org, 26 June 2023 (2023-06-26), pages 1-17, XP093134577, Ithaca DOI: 10.48550/arxiv.2306.14962 Retrieved from the Internet: URL:https://arxiv.org/pdf/2306.14962v1.pdf [retrieved on 2024-02-23] * abstract * * page 1, left-hand column, line 1 – page 12, right-hand column, last line * * page 14, left-hand column, line 20 – page 17, right-hand column, last line * | 1-15 | |

TECHNICAL FIELDS
SEARCHED (IPC)

G06N

-/--

The present search report has been drawn up for all claims

| Place of search | Date of completion of the search | Examiner |
|---|---|---|
| The Hague | 5 March 2024 | Totir, Felix |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

**Application Number**

EP 23 20 1091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Anonymous: "Under review as a conference paper at ICLR 2024 A SHOT-EFFICIENT DIFFERENTIAL EQUATION INTE-GRATOR USING QUANTUM NEURAL NETWORKS", <br><br> , <br> 23 February 2024 (2024-02-23), pages 1-22, XP093134557, <br> Retrieved from the Internet: <br> URL:https://openreview.net/pdf?id=2EamGPuWSc <br> [retrieved on 2024-02-23] <br> * abstract * <br> * page 1, line 1 – page 9, last line * <br> * page 13, line 1 – page 22, last line * <br> ----- | 1-15 | |

**TECHNICAL FIELDS SEARCHED (IPC)**

The present search report has been drawn up for all claims

| Place of search | Date of completion of the search | Examiner |
|---|---|---|
| The Hague | 5 March 2024 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

**REFERENCES CITED IN THE DESCRIPTION**

**Patent documents cited in the description**

- WO 2022101483 A1

- EP 23186602

**Non-patent literature cited in the description**

- **KYRIIENKO et al.** Generalized quantum circuit differentiation rules. *Phys. Rev. A*, vol. 104, 052417